# FASCICULE DE BREVET EUROPEEN

(11) **EP 3 769 064 B1**
(45) Date de publication et mention de la délivrance du brevet: **09.03.2022**
(21) Numéro de dépôt: 19716969.1
(22) Date de dépôt: 19.03.2019
(51) Int. Cl.: G01M 3/20, G01M 3/22

(54) **CLOCHE DE DÉTECTION DE FUITE POUR MEMBRANE D'ÉTANCHÉITÉ**
GLOCKENFÖRMIGE LECKERKENNUNGSVORRICHTUNG FÜR EINE DICHTMEMBRAN
BELL-SHAPED LEAK DETECTION DEVICE FOR A SEALING MEMBRANE

(30) Priorité: 21.03.2018 FR 1852400; 22.05.2018 FR 1870586
(43) Date de publication de la demande: 27.01.2021
(73) Titulaire: Gaztransport et Technigaz, 78470 Saint Rémy les Chevreuse (FR)
(72) Inventeur: FRAYSSE, Vincent, 78470 Saint Rémy Les Chevreuse (FR); HASSLER, David, 78470 Saint Rémy Les Chevreuse (FR); DELETRE, Bruno, 78470 Saint Rémy Les Chevreuse (FR); PERROT, Olivier, 78470 Saint Rémy Les Chevreuse (FR); DE FARIA, Anthony, 78470 Saint Rémy Les Chevreuse (FR); GIMBERT, Charles, 78470 Saint Rémy Les Chevreuse (FR)
(74) Mandataire: Loyer & Abello
(86) Numéro de dépôt international: PCT/FR2019/050623
(87) Numéro de publication internationale: WO 2019/180373

(56) Documents cités:
- EP-A1- 3 208 591
- FR-A1- 2 578 053
- JP-A- S5 737 240
- JP-A- 2016 223 849
- US-A- 3 524 342
- US-A- 3 555 884
- US-A- 4 104 905
- US-A1- 2017 167 944

## Description

### Domaine technique

L'invention se rapporte à une cloche de détection de fuite permettant de détecter des fuites d'une membrane d'étanchéité en particulier d'une membrane d'étanchéité ondulée, par exemple dans une cuve étanche. Ces cuves étanches peuvent par exemple être des cuves étanches et thermiquement isolantes pour le stockage et/ou le transport d'un fluide, tel qu'un fluide cryogénique.

### Arrière-plan technologique

Le document KR1020100050128 divulgue un procédé de test de l'étanchéité d'une membrane d'une cuve étanche et thermiquement isolante de stockage de GNL. La cuve comporte une structure multicouche et présente successivement, depuis l'extérieur vers l'intérieur, un espace isolant secondaire, une membrane d'étanchéité secondaire, un espace isolant primaire et une membrane d'étanchéité primaire destinée à être en contact avec le gaz naturel liquéfié contenu dans la cuve. Le procédé vise plus particulièrement à détecter des fuites au travers des cordons de soudure qui permettent de relier de manière étanche les tôles métalliques de la membrane d'étanchéité primaire. Le procédé prévoit d'injecter un gaz traceur dans l'espace isolant primaire puis de déplacer un équipement de détection équipé d'un analyseur de gaz traceur, à l'intérieur de la cuve, le long des cordons de soudure de la membrane d'étanchéité primaire. Ainsi, si l'équipement de détection détecte la présence du gaz traceur, il peut être conclu à un défaut d'étanchéité de la membrane d'étanchéité primaire. Dans un tel procédé, l'injection du gaz traceur dans l'espace isolant primaire est critique puisque le procédé de détection ne peut garantir des résultats fiables que si le gaz traceur a diffusé de manière homogène dans l'intégralité de l'espace isolant primaire.

De plus, l'équipement de détection est composé d'une unité de succion du gaz traceur et d'un détecteur à gaz traceur. L'unité de succion est déplacée à l'aide d'un chariot tout au long du cordon de soudure, le chariot étant situé sur une paroi de fond de la cuve et l'unité de succion étant fixée au chariot de manière à se trouver sur un cordon de soudure d'une paroi adjacente à la paroi de fond. Cependant, il est difficile à l'aide de cet équipement de vérifier l'intégralité des cordons de soudure de la cuve car l'équipement est encombrant et nécessite d'être connecté au chariot sur la paroi de fond. Cet équipement est également très lent car l'équipement ne vérifie qu'une faible portion du cordon de soudure à la fois et il est nécessaire de modifier l'assemblage de l'équipement au chariot pour changer de cordon de soudure.

JP2016223849 décrit un dispositif de détection de fuite pour paroi étanche à l'eau. Le dispositif comprend un boitier ayant une ouverture et un joint tout autour de l'ouverture. Le dispositif comprend des moyens de fixation formés par une barre en forme de U encadrant le boitier et ayant à chacune des extrémités un aimant destiné à être fixé sur la paroi métallique à tester. Le boitier et le joint sont formés de sorte à épouser la paroi au niveau du raccord entre deux plaques.

### Résumé de l'invention

Une idée à la base de l'invention est de proposer une cloche de détection ou un dispositif de détection de fuite permettant de tester l'étanchéité d'une membrane étanche d'une cuve qui soit fiable et facilement utilisable dans la cuve.

Une autre idée à la base de l'invention est de proposer une cloche de détection ou un dispositif de détection de fuite qui est utilisable rapidement permettant de tester l'étanchéité d'une membrane étanche d'une cuve en un minimum de temps.

Une autre idée à la base de l'invention est de proposer un procédé de test de l'étanchéité d'une membrane qui soit fiable et rapide à mettre en œuvre.

Selon un mode de réalisation, l'invention fournit une cloche de détection de fuite pour détecter une fuite sur une zone de test d'une membrane d'étanchéité d'une cuve, la cloche de détection comprenant :
- un corps principal destiné à être disposé sur la zone de test ;
- un joint d'étanchéité lié au corps principal et configuré pour définir une chambre de détection entre le corps principal et la zone de test, le joint d'étanchéité comportant une lèvre d'étanchéité périphérique présentant un contour fermé pour entourer la zone de test ;
- un moyen mécanique de pression porté par le corps principal et comportant au moins un élément de pression configuré pour exercer sur une portion de la lèvre d'étanchéité une pression dirigée vers la membrane lorsque le corps principal est disposé sur la zone de test
   dans laquelle la lèvre d'étanchéité comporte au moins une échancrure présentant une forme correspondant à celle d'une ondulation de la membrane, l'échancrure étant destinée à enjamber l'ondulation, et
   caractérisée en ce que l'élément de pression est adapté pour presser localement la lèvre d'étanchéité dans une portion de ladite lèvre d'étanchéité qui est située à une base de l'échancrure.

Grâce à ces caractéristiques, la cloche de détection peut être placée rapidement sur une zone de test afin que le joint d'étanchéité puisse former une chambre de détection sur toute la zone de test. De plus, le moyen mécanique de pression permet de presser la lèvre d'étanchéité sur une ou plusieurs portions, notamment là où il se présente un risque que le joint d'étanchéité se décolle de la membrane d'étanchéité, afin de fiabiliser la détection d'une éventuelle fuite par la cloche de détection.

Avantageusement, la cloche de détection est apte à détecter un gaz traceur. Selon une possibilité offerte par l'invention, ce gaz traceur n'est pas nécessairement injecté dans la zone dont teste l'étanchéité, il peut être dans la zone par une autre manière.

En outre, grâce à la cloche de détection de fuite selon l'invention, on est dorénavant capable d'obtenir, sans difficulté, une (dé)pression inférieure à 100 Pa dans la chambre de détection, par exemple de l'ordre de 50 à 60 Pa (0,5-0,6 mbar).

Selon d'autres modes de réalisation avantageux, une telle cloche peut présenter une ou plusieurs des caractéristiques suivantes.

Selon un mode de réalisation, l'élément de pression est un élément déformable élastiquement qui exerce une pression sur la portion de la lèvre d'étanchéité par déformation élastique.

Ainsi, l'élasticité de l'élément de pression permet lors de sa déformation élastique d'exercer un effort de rappel sur la lèvre d'étanchéité vers la membrane d'étanchéité.

Selon un mode de réalisation, l'élément de pression est orienté perpendiculairement au contour de la lèvre d'étanchéité périphérique.

Selon un mode de réalisation, la lèvre d'étanchéité présente un état de service, lorsqu'une dépression est appliquée dans la chambre de détection, dans lequel une portion de la lèvre d'étanchéité est maintenue entre le corps principal et la membrane d'étanchéité sur au moins une partie de la périphérie de la chambre de détection, avantageusement sur toute la périphérie de ladite chambre.

Selon un mode de réalisation, la cloche de détection de fuite présente une forme allongée d'une longueur supérieure ou égale à 0,5 m, préférentiellement supérieure ou égale à 1 m, de façon plus préférentielle supérieure ou égale à 2 m.

Selon un mode de réalisation, le moyen mécanique de pression comporte une pluralité d'éléments de pression configurés pour exercer une pression sur une pluralité de portions de la lèvre d'étanchéité, des portions étant situées aux deux extrémités de la lèvre d'étanchéité dans une direction longitudinale.

Selon un mode d'exécution de l'invention, des portions de la lèvre d'étanchéité pressées par le moyen mécanique de pression sont situées aux deux extrémités de la lèvre d'étanchéité dans une direction longitudinale, soit aux deux extrémités de la cloche compte tenu que cette dernière présente une forme générale longitudinale.

Ainsi, le moyen mécanique de pression applique une pression sur différentes zones où il y a un risque de décollement du joint, à savoir les extrémités du joint d'étanchéité.

Selon un mode de réalisation, la lèvre d'étanchéité comporte au moins une échancrure présentant une forme correspondant à celle d'une ondulation de la membrane, l'échancrure étant destinée à enjamber l'ondulation.

Selon un mode de réalisation, la lèvre d'étanchéité comporte au moins deux échancrures, par exemple trois échancrures.

Grâce à ces caractéristiques, il est possible de placer la cloche de détection sur une membrane d'étanchéité comprenant des tôles ondulées, le ou les échancrures permettant à la cloche d'enjamber les ondulations.

Selon un mode de réalisation, la portion de la lèvre d'étanchéité pressée par le moyen mécanique de pression est située à une base de l'échancrure.

Grâce à cette caractéristique, il est possible de placer la cloche de détection sur une membrane d'étanchéité comprenant des tôles ondulées, le ou les échancrures permettant à la cloche d'enjamber les ondulations.

Ainsi, le moyen mécanique de pression applique une pression sur une zone où il y a des risques de décollement du joint d'étanchéité du au changement de pente de l'échancrure.

Selon un mode de réalisation, le moyen mécanique de pression comporte une pluralité d'éléments de pression configurés pour exercer une pression sur une pluralité de portions de la lèvre d'étanchéité, des portions étant situées aux bases de l'échancrure ou des échancrures.

Ainsi, le moyen mécanique de pression applique une pression sur différentes zones où il y a un risque de décollement du joint, à savoir la base de ou des échancrures.

Selon un mode de réalisation, la portion de la lèvre d'étanchéité est située sur un sommet de l'échancrure.

Selon un mode d'exécution de l'invention, toutes les portions de la lèvre d'étanchéité situées aux bases de l'échancrure sont pressées par la pluralité d'éléments de pression du moyen mécanique.

Selon un mode de réalisation, au moins un des, une partie des ou les éléments de pression comportent une lame courbée dont au moins une des extrémités vient en butée sur la base d'une échancrure

Avantageusement, au moins un des, une partie des ou les éléments de pression comportent une lame courbée dont les deux extrémités viennent en butée sur la base de deux échancrures contiguës.

Grâce à cette caractéristique, le positionnement de la cloche de détection de fuite est rendu plus aisé car la lame courbée va permettre le placement adéquat en pression des échancrures de la lèvre d'étanchéité sur les deux ondes contiguës de la membrane, quel que soient les éventuelles légères variations de la distance entre ces deux ondes contiguës ou le positionnement approximatif de la cloche de détection de fuite sur la membrane à ondes par un ou plusieurs opérateurs.

Selon un mode de réalisation, le moyen mécanique de pression comporte un élément support s'étendant sur toute la longueur du corps principal au-dessus de celui-ci et fixé au corps principal.

Selon un mode de réalisation, les lames courbées sont réparties sur la lèvre d'étanchéité et sont fixées par des moyens de fixation à l'élément support.

Selon un mode de réalisation, les lames courbées sont déformables élastiquement de manière à, lorsqu'elles sont déformées, exercer un effort de retour élastique sur la lèvre d'étanchéité.

Selon un mode de réalisation, les moyens de fixation comportent une pluralité de pions, les pions comprenant chacun une tige montée mobile sur un corps, la tige comportant une extrémité en appui contre l'une des lames courbées, le corps étant fixé à l'élément de support, et comprenant également un ressort reliant la tige au corps, le ressort agissant entre le corps et la tige afin de positionner l'extrémité de la tige en appui contre la lame courbée et le ressort étant configuré pour exercer une force de rappel sur la lame courbée de sorte que la lame courbée vienne plaquer la lèvre d'étanchéité contre le pied d'une ondulation.

Selon un mode de réalisation, le moyen mécanique de pression comprend une pluralité d'éléments de pression d'extrémité, les éléments de pression d'extrémité étant situés aux deux extrémités de la lèvre d'étanchéité dans une direction longitudinale, soit aux deux extrémités de la cloche étant donné que cette dernière présente une forme longitudinale.

Ainsi, une cloche selon l'invention peut présenter une longueur d'au moins un (1) mètre et une largeur comprise entre 10 et 20 centimètre (cm), de préférence entre 14 cm et 16 cm.

La cloche de détection de fuites selon l'invention est apte, lorsqu'elle utilisée sur une zone de membrane comportant des ondes, à tester une pluralité d'ondes (le ou les points de soudure présents sur ladite ou lesdites ondes), soit au moins trois (3) ondes et jusqu'à près d'une dizaine d'ondes. Il pourra également être envisagé d'associer plusieurs cloches de détection les unes à côté des autres, ou les unes à la suite des autres, afin de former une longueur de zone de test plus importante/conséquente, une seule pompe à vide pouvant alors être utilisée pour générer le vide requis dans ces cloches de détection de fuites associées les unes aux autres.

Concernant le poids d'une telle cloche de détection, il pourra être compris entre 3 kilos et 25 kilos, préférentiellement entre 5 et 10 kilos, en fonction en particulier des matériaux utilisés, de sa longueur et de sa largeur.

Selon un mode de réalisation, au moins un ou les éléments de pression d'extrémité comprennent un pion d'extrémité, le pion d'extrémité comprenant une tige montée mobile sur un corps, un élément d'appui allongé étant fixé à une extrémité de la tige, l'élément d'appui allongé venant en appui contre la lèvre d'étanchéité, et le corps étant fixé à l'élément de support, le pion d'extrémité comprenant également un ressort reliant la tige au corps, le ressort agissant entre le corps et la tige afin de positionner l'élément d'appui allongé contre la lèvre d'étanchéité, le ressort étant configuré pour exercer une force de rappel sur l'élément d'appui allongé de sorte que l'élément d'appui allongé vienne plaquer la lèvre d'étanchéité contre la zone à tester.

Selon un mode de réalisation, la deuxième extrémité est équipée d'un élément d'appui allongé, l'élément d'appui allongé étant configuré pour transmettre l'effort de retour élastique sur une zone de la lèvre d'étanchéité correspondant à une longueur de l'élément d'appui allongé.

Selon un mode de réalisation, la deuxième extrémité d'un premier pion d'extrémité et la deuxième extrémité d'un deuxième pion d'extrémité adjacent au premier pion d'extrémité sont fixées l'une à l'autre à l'aide d'un élément d'appui allongé.

Selon un mode de réalisation, au moins un ou les éléments de pression d'extrémité comprennent une pluralité d'éléments de réglage formant une ligne d'éléments, l'élément de réglage comprenant une tige s'étendant en direction de la lèvre d'étanchéité et une extrémité réglable dans une direction longitudinale de la tige de sorte à venir en contact avec la lèvre d'étanchéité après réglage.

Selon un mode de réalisation, l'élément de pression comporte une lame courbée comprenant à une de ses extrémités en contact avec la lèvre d'étanchéité un manchon cylindrique.

Ainsi, le manchon cylindrique permet d'appliquer uniformément la pression du moyen mécanique de pression sur une partie de la lèvre d'étanchéité.

Selon un mode de réalisation, le joint d'étanchéité comprend une enveloppe qui recouvre au moins partiellement le corps principal et qui est fixée au corps principal, la lèvre d'étanchéité périphérique étant liée à l'enveloppe de manière à la prolonger et étant recourbée à l'opposé du corps principal.

Selon un mode de réalisation, le manchon cylindrique comprend une direction de longueur, la direction de longueur du manchon cylindrique étant sensiblement orthogonale à l'enveloppe de manière à ce que le manchon cylindrique s'étende de l'enveloppe à une extrémité de la lèvre d'étanchéité.

Selon un mode de réalisation, la lèvre d'étanchéité comprend une partie recourbée sensiblement orthogonale à l'enveloppe, la partie recourbée ayant une dimension en section transversale supérieure ou égale à 1 cm, de préférence supérieure ou égale à 1,5 cm, de façon plus préférentielle supérieure ou égale à 2 cm.

Selon un mode de réalisation, le joint d'étanchéité est réalisé dans un matériau élastomère présentant une dureté comprise entre 20 et 50 shore A.

Grâce à ces caractéristiques, le joint d'étanchéité est composé d'un matériau suffisamment souple pour être déformé par le moyen mécanique de pression.

Selon un mode de réalisation, le matériau élastomère du joint d'étanchéité est choisi parmi le polyuréthane élastomère et le caoutchouc éthylène-propylène-diène monomère (EPDM). Le matériau élastomère du joint d'étanchéité peut également être en silicone, en nitrile ou en Viton ^{®}.

Selon un mode de réalisation, le corps principal comporte un noyau rigide, et le joint d'étanchéité comporte une enveloppe appliquée hermétiquement contre une paroi périphérique du noyau rigide.

Selon un mode de réalisation, le noyau rigide comporte un évidement sur une surface inférieure destinée à être tournée vers la zone de test.

Selon un mode de réalisation, le noyau rigide comporte un canal reliant l'évidement à une surface supérieure du noyau rigide pour connecter une pompe à vide.

Selon un mode de réalisation, l'invention fournit un dispositif de détection de fuite pour tester l'étanchéité d'une membrane d'une cuve étanche et thermiquement isolante, le dispositif de détection de fuite comprenant :
- une cloche de détection de fuite comme décrit ci-dessus ;
- une pompe à vide raccordée à la chambre de détection ;
- un équipement d'analyse relié à la chambre de détection pour analyser une quantité de gaz présent dans la chambre de détection.

Selon un mode de réalisation, l'invention fournit un ensemble de détection de fuite sur une zone de test d'une membrane d'étanchéité d'une cuve, l'ensemble comprenant :
- une cloche de détection de fuite décrit ci-dessus ou un dispositif de détection de fuite décrit ci-dessus ;
- une membrane d'étanchéité comportant une zone de test ;
dans lequel la cloche de détection de fuite est située sur la zone de test de manière à ce que la lèvre d'étanchéité entoure la zone de test.

Selon un mode de réalisation, l'invention fournit un procédé d'utilisation d'un dispositif de détection de fuite comme décrit ci-dessus sur une zone de test d'une membrane d'étanchéité d'une cuve, dans lequel le procédé comporte les étapes suivantes :
- placer la cloche de détection sur la zone de test de manière à ce que la lèvre d'étanchéité entoure complètement la zone de test ;
- appliquer une pression sur la lèvre d'étanchéité à l'aide du moyen mécanique de pression afin de presser la lèvre d'étanchéité contre la membrane d'étanchéité ;
- mettre en dépression la chambre de détection au moyen de la pompe à vide ;
- conduire les gaz présents dans la chambre de détection vers l'équipement d'analyse ; et
- analyser au moyen de l'équipement d'analyse les gaz venant de la chambre de détection et délivrer une variable représentative des gaz présents dans la chambre de détection.

Selon un mode de réalisation, la cloche de détection de fuite est orientée sur la zone de test de manière à ce qu'une longueur de la cloche de détection de fuite soit superposée avec la zone de test.

Selon un mode de réalisation, la zone de test est une partie d'un cordon de soudure de la membrane d'étanchéité.

Ainsi, la cloche de détection de fuite permet de vérifier s'il n'y a pas de défaut sur le cordon de soudure qui pourrait engendrer une fuite dans la membrane d'étanchéité.

Selon un mode de réalisation, la zone de test se situe sur une membrane d'étanchéité ondulée.

Selon un mode de réalisation, l'invention fournit un procédé de test de l'étanchéité d'une membrane d'une cuve étanche et thermiquement isolante, la cuve étanche et thermiquement isolante présentant une forme polyédrique définie par une pluralité de parois de cuve qui sont fixées sur une structure porteuse, chacune des parois de cuve comportant une barrière thermiquement isolante comprenant des éléments isolants ancrés à la structure porteuse et une membrane reposant contre les éléments isolants de la barrière thermiquement isolante, les barrières thermiquement isolantes des parois de cuve communicant les unes avec les autres et définissant ensemble l'espace thermiquement isolant ; le procédé de test de l'étanchéité comportant les étapes consistant à :
- injecter du gaz traceur dans l'espace thermiquement isolant ;
- fournir un dispositif de détection de fuite comprenant une cloche de détection configurée pour définir avec la membrane une chambre de détection étanche et une pompe à vide qui est, d'une part, raccordée à la chambre de détection et, d'autre part, à un équipement d'analyse ;
- disposer la cloche de détection contre une face de la membrane opposée à l'espace thermiquement isolant, la cloche de détection étant disposée de manière à ce que la chambre de détection soit disposée en regard d'une portion d'un cordon de soudure à tester ;
- mettre en dépression la chambre de détection au moyen de la pompe à vide ;
- conduire la phase gazeuse contenue dans la chambre de détection vers l'équipement d'analyse ; et
- analyser au moyen de l'équipement d'analyse ladite phase gazeuse et délivrer une variable représentative d'une concentration de gaz traceur dans ladite phase gazeuse.

Il est bien entendu que la pression appliquée sur la lèvre d'étanchéité, avant la mise en dépression de la chambre de détection, s'exerce sur la surface de ladite lèvre depuis l'extérieure de la chambre de détection. De cette manière, la lèvre d'étanchéité, qui peut consister en un élément unique, définit un volume étanche ou hermétique destiné à devenir, une fois la mise en dépression, la chambre de dépression.

Selon un mode de réalisation, l'invention fournit un dispositif de détection de fuite pour tester l'étanchéité d'une membrane d'une cuve étanche et thermiquement isolante ; le dispositif de détection de fuite comprenant une cloche de détection configurée pour définir avec la membrane une chambre de détection étanche et une pompe à vide qui est, d'une part, raccordé à la chambre de détection et, d'autre part, à un équipement d'analyse.

Selon des modes de réalisation, le procédé de test de l'étanchéité d'une membrane et/ou le dispositif de détection de fuite peuvent comporter une ou plusieurs des caractéristiques suivantes.

Selon un mode de réalisation, l'injection du gaz traceur dans l'espace thermiquement isolant est mise en œuvre au moyen du procédé d'injection d'un gaz traceur précité. Toutefois, selon un autre mode de réalisation, l'injection du gaz traceur dans l'espace thermiquement isolant peut également être mise en œuvre selon un autre procédé.

Selon un mode de réalisation, l'équipement d'analyse est un spectromètre de masse.

Selon un mode de réalisation, la cloche de détection présente une forme allongée.

Selon un mode de réalisation, la cloche de détection comporte un noyau rigide et un joint d'étanchéité qui sont fixés l'un à l'autre et sont agencés pour définir avec la membrane à tester la chambre de détection.

Selon un mode de réalisation, le joint d'étanchéité comporte une enveloppe fixée au noyau rigide et une lèvre d'étanchéité périphérique qui prolonge l'enveloppe.

Selon un mode de réalisation, l'enveloppe du joint d'étanchéité présente un fond qui recouvre la surface supérieure du noyau rigide et une paroi périphérique qui épouse la périphérie du noyau rigide.

Selon un mode de réalisation, la lèvre d'étanchéité périphérique est recourbée vers l'extérieur de la cloche de détection et est configurée pour se fléchir et se plaquer contre la membrane lorsque la chambre de détection est mise en dépression.

Selon un mode de réalisation, la portion du cordon de soudure est traversée par au moins une ondulation de la membrane.

Selon un mode de réalisation, la lèvre d'étanchéité périphérique est conformée pour s'adapter à la géométrie de ladite au moins une ondulation.

Selon un mode de réalisation, la portion du cordon de soudure est traversée par au moins deux ondulations, par exemple trois ondulations, parallèles de la membrane et la lèvre d'étanchéité périphérique est conformée pour s'adapter à la géométrie desdites ondulations.

Selon un mode de réalisation, la lèvre d'étanchéité périphérique comporte au moins deux échancrures présentant une forme correspondant à celle d'une ondulation de la membrane faisant saillie vers l'intérieur de la cuve, lesdites échancrures étant destinées à enjamber ladite ondulation.

Selon un mode de réalisation, au moins une ondulation de la membrane fait saillie vers l'intérieur de la cuve, la cloche de détection étant disposée contre la membrane de manière à ce que les échancrures enjambent l'ondulation.

Selon un mode de réalisation, la lèvre d'étanchéité périphérique comporte au moins deux zones en saillie présentant une forme correspondant à celle d'une ondulation de la membrane faisant saillie vers l'extérieur de la cuve.

Selon un mode de réalisation, la cloche de détection est disposée contre la membrane de manière à ce que les zones en saillie s'insèrent dans l'ondulation.

Selon un mode de réalisation, le joint d'étanchéité est réalisé dans un matériau élastomère présentant une dureté comprise entre 20 et 50 Shore A.

Selon un mode de réalisation, le matériau élastomère du joint d'étanchéité est choisi parmi le polyuréthane élastomère, le silicone, le nitrile et le Viton ^{®}.

Selon un mode de réalisation, la cloche de détection est équipée d'un système de serrage apte à plaquer la lèvre d'étanchéité périphérique contre la membrane à tester.

Selon un mode de réalisation, préalablement à la mise en dépression de la chambre de détection, l'on actionne le système de serrage de manière à garantir l'étanchéité de la chambre de détection.

Selon un mode de réalisation, lorsque le joint d'étanchéité comporte au moins deux échancrures présentant une forme correspondant à celle d'une ondulation de la membrane faisant saillie vers l'extérieur de la cuve et traversant la portion du cordon de soudure, le système de serrage comporte une pince au niveau de chacune des échancrures, chaque pince comportant deux branches respectivement disposées de part et d'autre de l'échancrure et configurées pour venir appliquer un effort de serrage de la lèvre d'étanchéité périphérique contre l'ondulation de la membrane.

Selon un mode de réalisation, l'on met en dépression la chambre de détection jusqu'à une valeur de pression absolue comprise entre 10 et 1000 Pa, de préférence inférieure à 100 Pa absolu.

Selon un mode de réalisation, l'on analyse la phase gazeuse pendant une durée supérieure ou égale à 5 secondes.

Selon un mode de réalisation, l'on compare la variable représentative d'une concentration de gaz traceur dans ladite phase gazeuse à un seuil et l'on détermine que l'étanchéité de la portion du cordon de soudure est défectueuse lorsque la variable représentative d'une concentration de gaz traceur dans ladite phase gazeuse est supérieure audit seuil.

Selon un mode de réalisation, le dispositif de détection de fuite comporte en outre une chambre d'homogénéisation qui est disposée entre la chambre de détection et l'équipement d'analyse, la cloche de détection comportant une entrée de gaz équipée d'un robinet, la chambre d'homogénéisation et l'entrée de gaz étant raccordées à deux extrémités opposées de la chambre de détection.

Selon un mode de réalisation, le robinet de l'entrée de gaz est fermé lors de la mise en dépression de la chambre de détection, l'étape de conduire la phase gazeuse contenue dans la chambre de détection comportant :
- ouvrir le robinet de l'entrée de gaz et conduire la phase gazeuse contenue dans la chambre de détection vers la chambre d'homogénéisation ; et
- conduire la phase gazeuse de la chambre d'homogénéisation vers l'équipement d'analyse.

Selon un mode de réalisation, l'invention fournit un procédé de contrôle de la diffusion du gaz traceur dans l'espace thermiquement isolant.

Selon un mode de réalisation, le procédé de contrôle de la diffusion du gaz traceur est mis en oeuvre au cours du procédé de test de l'étanchéité précité. Toutefois, dans un autre mode de réalisation, il peut également être mis en œuvre de manière indépendante.

Selon un mode de réalisation, le contrôle de la diffusion du gaz traceur dans l'espace thermiquement isolant comporte :
- prélever du gaz contenu dans l'espace thermiquement isolant au moyen d'une pluralité de dispositifs de prélèvement traversant chacun la membrane de l'une des parois de cuve ; et
- conduire le gaz prélevé vers un équipement d'analyse, tel qu'un spectromètre de masse par exemple.

Selon un mode de réalisation, les dispositifs de prélèvement sont avantageusement disposés à proximité de zones d'angle formées à la jonction entre deux ou trois parois de cuve.

Selon un mode de réalisation, chaque dispositif de prélèvement de gaz comporte une plaque de recouvrement qui est associée à une membrane au moyen d'un cordon de mastic entourant une zone de la membrane dépourvue de soudure à la jonction entre deux éléments de la membrane, la plaque de recouvrement présentant un trou et un raccord destiné à être raccordé à un conduit relié à l'équipement d'analyse, ledit raccord étant soudé de manière étanche en périphérie du trou de la plaque de recouvrement.

Selon un mode de réalisation, le dispositif de prélèvement de gaz comporte un organe de raccordement qui présente un embout destiné à être raccordé de manière étanche à un conduit relié à l'équipement d'analyse, un épaulement et une tige inférieure filetée qui fait saillie depuis l'épaulement, traverse la membrane secondaire et est vissée dans un alésage fileté ménagé dans une platine fixée sur la barrière thermiquement isolante; le dispositif de prélèvement de gaz comportant en outre un joint d'étanchéité annulaire qui est enfilé sur la tige inférieure et qui est pris en sandwich entre la membrane secondaire et l'épaulement, l'organe de raccordement présentant un perçage qui débouche, d'une part, au niveau de l'embout et d'autre part, dans l'espace thermiquement isolant.

### Brève description des dessins

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] est une vue schématique d'un dispositif de détection de fuite selon un premier mode de réalisation.
[Fig.2] est une vue en coupe transversale selon le plan II-II de la cloche de détection du dispositif de détection de fuite de la figure 1.
[Fig.3] est une vue en perspective d'un joint d'étanchéité selon un premier mode de réalisation.
[Fig.4] est une vue schématique d'une variante d'un dispositif de détection de fuite dans laquelle la cloche de détection est équipée d'un système de serrage.
[Fig.5] est une vue en perspective d'un joint d'étanchéité selon un deuxième mode de réalisation.
[Fig.6] illustre schématiquement le positionnement de la cloche de détection en regard d'une portion d'un cordon de soudure assurant l'étanchéité entre deux tôles métalliques ondulées adjacentes d'une membrane.
[Fig.7] est une vue schématique d'un dispositif de détection de fuite selon un deuxième mode de réalisation.
[Fig.8] est une vue en perspective d'une cloche de détection de fuite selon un troisième mode de réalisation.
[Fig.9] est une vue schématique en coupe transversale de la cloche de détection de la figure 8, avant mise en dépression de la chambre de détection.
[Fig.10] est une vue schématique en coupe transversale de la cloche de détection de la figure 8, après mise en dépression de la chambre de détection.
[Fig.11] est une illustration schématique d'une structure multicouche d'une paroi d'une cuve à membranes.
[Fig.12] est une vue schématique partielle d'une cuve étanche et thermiquement isolante illustrant des dispositifs d'injection de gaz traceur positionnés au travers d'une membrane de la paroi de fond de la cuve.
[Fig.13] est une vue en perspective d'une cloche de détection de fuite selon un quatrième mode de réalisation.
[Fig.14] est une vue agrandie du détail XIV de la figure 13 illustrant un élément de pression de la cloche de détection de fuite.
[Fig.15] représente une vue agrandie du détail XV de la figure 13 illustrant une première extrémité de la cloche de détection de fuite.
[Fig.16] représente une vue agrandie du détail XVI de la figure 13 illustrant une deuxième extrémité de la cloche de détection de fuite.
[Fig.17] représente une vue agrandie du détail XVI de la figure 13 selon un autre angle de vue.

### Description des modes de réalisation

On va décrire ci-dessous un dispositif de détection de fuite qui peut être utilisé pour détecter des fuites dans différents assemblages étanches, par exemple un assemblage soudé. Dans les exemples ci-dessous, l'assemblage soudé est une membrane d'étanchéité pour une cuve de fluide.

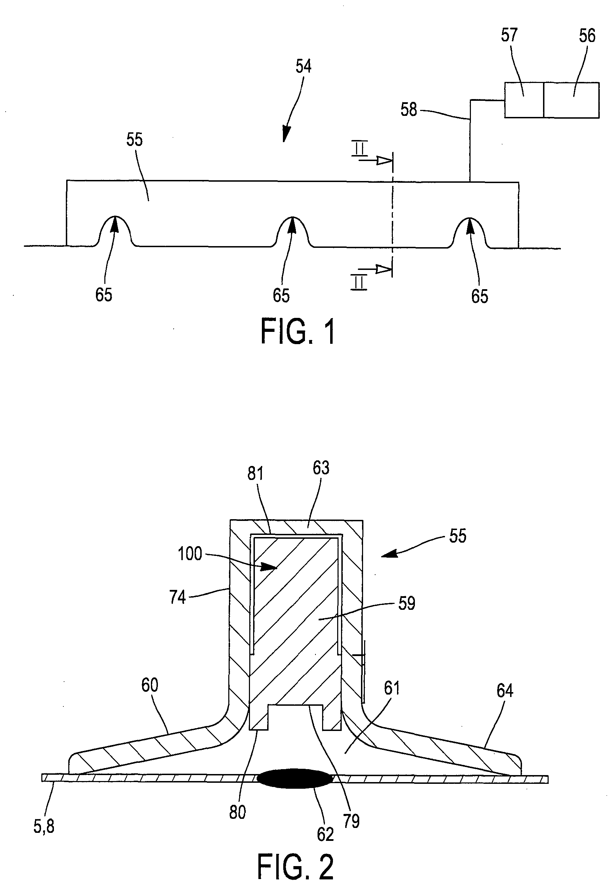

Pendant l'étape du test d'étanchéité permettant de vérifier l'étanchéité des cordons de soudure d'une membrane 5, 8, l'on utilise un dispositif de détection de fuite 54, tel que représenté sur la figure 1.

Le dispositif de détection de fuite 54 comporte une cloche de détection 55 qui est destinée à être disposée contre la face interne de la membrane 5, 8 en regard d'une portion du cordon de soudure à tester.

La cloche de détection 55 présente une forme allongée et présente une longueur comprise entre 0,5 et 4 m, par exemple de l'ordre de 1 m. La longueur de la cloche de détection 55 est avantageusement la plus grande possible de manière à vérifier l'étanchéité d'une zone plus importante au cours d'un seul et unique test. Néanmoins, le choix de cette longueur de la cloche pourra être adaptée en fonction d'une part des dimensions de la membrane 5, 8, et donc de la cuve, à tester et d'autre part en fonction de sa manœuvrabilité par un minimum d'opérateur(s).

Comme représenté sur la figure 2, la cloche de détection 55 comporte un corps principal 100 rigide et un joint d'étanchéité 60 souple qui sont fixés l'un à l'autre et qui sont agencés pour définir avec la membrane 5, 8 à tester une chambre de détection 61 étanche, disposée en regard de la portion du cordon de soudure 62 à tester.

En revenant à la figure 1, l'on observe que le dispositif de détection de fuite 54 comporte également un équipement d'analyse 56 qui est raccordé à la chambre de détection 61 et permet de détecter le gaz traceur. Dès lors que l'équipement d'analyse 56 détecte du gaz traceur dans une quantité supérieure à un seuil, il peut être conclu à un défaut d'étanchéité de la portion du cordon de soudure 62 testée. Selon un mode de réalisation, l'équipement d'analyse 56 est un spectromètre de masse.

Le dispositif de détection de fuite 54 comporte également une pompe à vide 57 qui est associée audit équipement d'analyse 56. La pompe à vide 57 est raccordée, d'une part, à la chambre de détection de la cloche de détection 55 de manière à permettre une mise en dépression de la chambre de détection et, d'autre part, à l'équipement d'analyse 56 de manière à conduire le gaz contenu dans la chambre de détection 61 vers l'équipement d'analyse 56.

La pompe à vide 57 est reliée à la cloche de détection 55 via un tuyau 58 qui est de préférence flexible. Le tuyau 58 est raccordé à un canal qui est ménagé dans le corps principal 100 et débouche dans la chambre de détection 61.

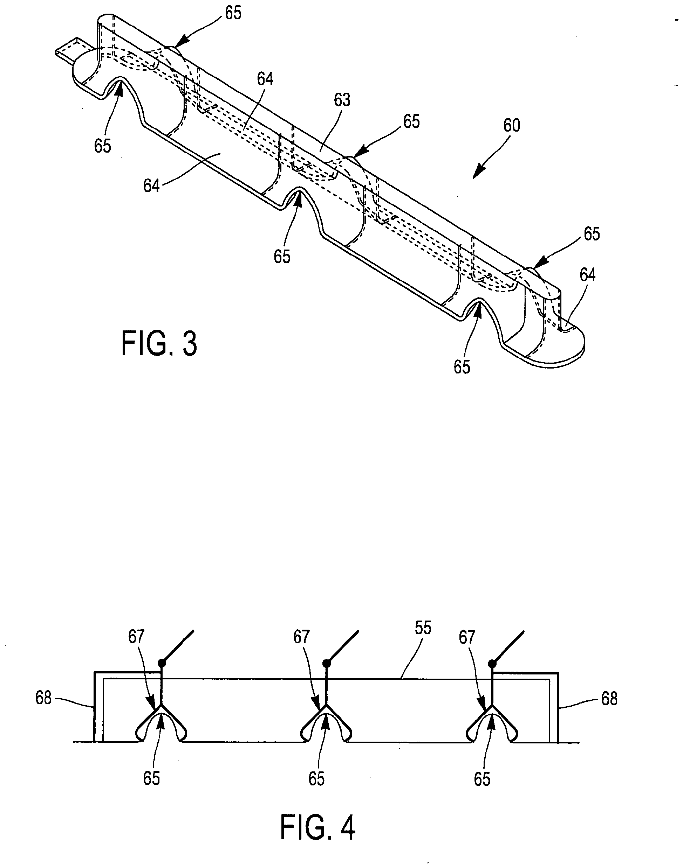

Comme représenté sur les figures 2 et 3, le corps principal 100 comporte un noyau rigide 59 et le joint d'étanchéité 60 comporte une enveloppe 63 épousant la forme du noyau rigide 59 et une lèvre d'étanchéité périphérique 64 qui prolonge l'enveloppe 63 vers le bas. L'enveloppe présente un fond 63 qui recouvre la surface supérieure du noyau rigide 59 et une paroi périphérique 74 qui épouse la périphérie du noyau rigide 59. Le fond 63 présente au moins un trou, non représenté, auquel est raccordé de manière étanche le tuyau 58 relié à la pompe à vide 57. Le noyau rigide 59 comporte sur sa surface inférieure 80 un évidement 79 sur toute la longueur du noyau rigide 59. L'évidement 79 permet lors d'une mise en dépression de la chambre de détection 61 d'assurer, malgré un abaissement du noyau rigide 59 vers la membrane 5, 8 dû à une déformation de la lèvre d'étanchéité 64, que la zone de test 62 se trouve toujours en contact fluidique avec la chambre de détection 62. De plus, le noyau rigide 59 comporte également un canal 82, non représenté sur la figure 2 car présent seulement dans un plan passant au niveau du tuyau 58, permettant de relier l'évidement 79 à une surface supérieure 81 du noyau rigide 59. Le canal 82 permet de mettre en communication la chambre de détection 61 avec la pompe à vide 57 et l'équipement d'analyse 56 via le tuyau 58.

La lèvre d'étanchéité périphérique 64 est recourbée vers l'extérieur de la cloche de détection 55 et est ainsi configurée pour se fléchir et se plaquer contre la membrane 5, 8 lorsque la chambre étanche 61 est mise en dépression. En d'autres termes, la lèvre d'étanchéité périphérique 64 présente une section présentant une forme générale de L.

La portion recourbée vers l'extérieur de la lèvre d'étanchéité périphérique 64 présente une largeur de l'ordre de 15 à 40 mm. La lèvre d'étanchéité périphérique 64 est conformée pour s'adapter à la géométrie de la membrane 5, 8 le long du cordon de soudure à tester. Aussi, sur la figure 3, la lèvre d'étanchéité périphérique 64 comporte des échancrures 65 présentant une forme correspondant à celle des ondulations de la membrane 5, 8 que la cloche de détection 55 est destinée à enjamber lorsqu'elle est en position contre la portion du cordon de soudure 62 à tester.

Le joint d'étanchéité 60 est avantageusement réalisé dans un matériau élastomère présentant une dureté comprise entre 20 et 50 Shore A. Le joint d'étanchéité est par exemple réalisé en polyuréthane élastomère, en caoutchouc EPDM, en silicone, en nitrile ou en Viton ^{®}.

Dans un mode de réalisation illustré schématiquement sur la figure 4, la cloche de détection 55 est en outre équipée d'un moyen mécanique de pression 66, qui est dans ce mode de réalisation un système de serrage 66, apte à plaquer la lèvre d'étanchéité périphérique 64 contre la membrane 8 à tester de manière à garantir l'étanchéité de la chambre de détection 61. Le système de serrage 66 comporte ici une pince 67 au niveau de chacune des échancrures 65 de la lèvre d'étanchéité périphérique 64. Chaque pince 67 comporte deux branches respectivement disposées de part et d'autre de l'échancrure 65 et configurées pour venir appliquer un effort de serrage de la lèvre d'étanchéité périphérique 64 contre la membrane 8. De manière avantageuse, les branches sont configurées pour serrer la lèvre d'étanchéité périphérique 64 contre la membrane d'étanchéité, à proximité de la base de l'ondulation.

Par ailleurs, dans le mode de réalisation représenté, le système de serrage 66 comporte en outre, au niveau de chacune des extrémités longitudinales de la cloche de détection 55, un doigt 68, mobile, qui est configuré pour venir plaquer l'une des extrémités longitudinales de la lèvre d'étanchéité périphérique 64 contre la membrane 8.

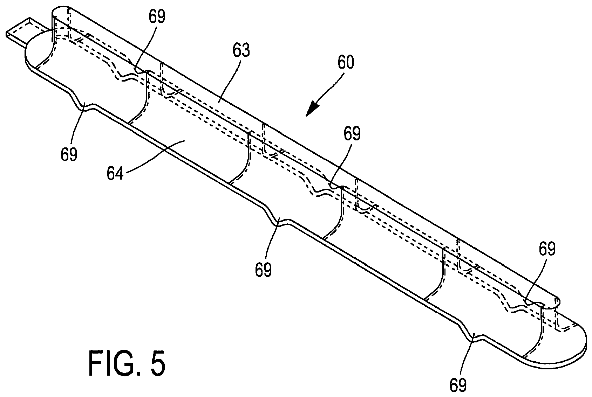

La figure 5 illustre un joint d'étanchéité 60 selon un mode de réalisation alternatif. Ce joint d'étanchéité 60 est conformé pour s'adapter à une membrane 5 dans laquelle les ondulations font saillie vers l'extérieur de la cuve. Une telle membrane est par exemple une membrane secondaire 5 selon la technologie Mark V. Aussi, la lèvre d'étanchéité périphérique 64 comporte des zones en saillie 69 destinées à venir s'insérer à l'intérieur des ondulations de la membrane 5.

La procédure pour détecter un défaut d'étanchéité d'un cordon de soudure est la suivante.

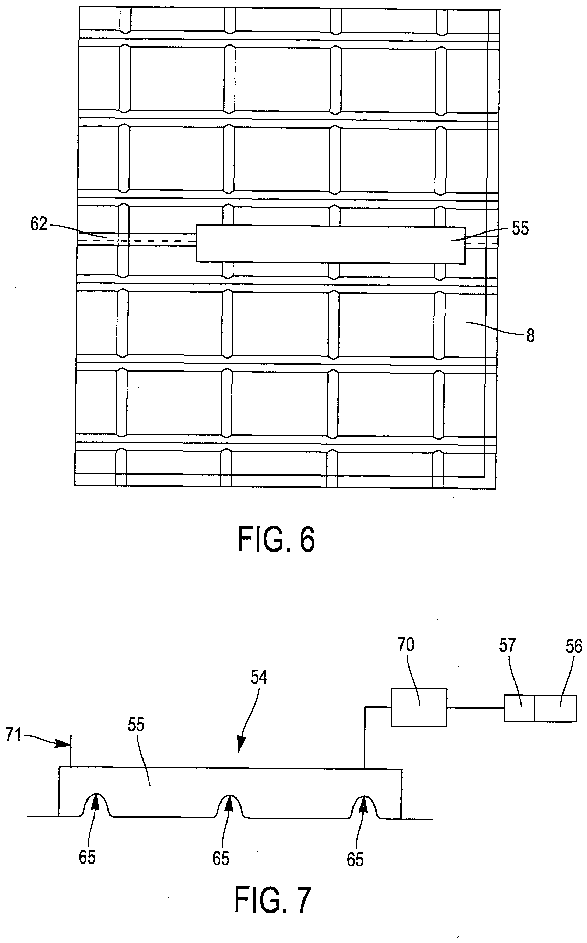

Dans un premier temps l'on dispose la cloche de détection 55 en regard de la portion du cordon de soudure 62 à tester, tel que représenté sur la figure 6.

Il convient de s'assurer que la cloche de détection 55 est convenablement centrée par rapport au cordon de soudure 62 de sorte que les deux parties latérales de la portion recourbée de la lèvre d'étanchéité périphérique 64 soient disposées de part et d'autre du cordon de soudure 62.

La pompe à vide 57 est alors mise en fonctionnement afin de mettre la chambre de détection 61 en dépression et favoriser la migration du gaz traceur au travers des zones défectueuses du cordon de soudure 62.

Dès que la pression à l'intérieur de la chambre de détection 61 passe en dessous d'un seuil de pression Ps, un flux de gaz est conduit de la chambre de détection 61 vers l'équipement d'analyse 56 et un taux de fuite ϕ en gaz traceur est mesuré pendant une durée minimale Tm. Le taux de fuite ϕ est alors comparé à un seuil cps.

Si le taux de fuite ϕ est inférieur au seuil cps, alors il est conclu que la portion testée du cordon de soudure 62 ne présente pas de défaut d'étanchéité. Dans ce cas, la cloche de détection 55 est alors disposée en regard d'une portion adjacente du cordon de soudure 62 en assurant un recouvrement entre les deux portions successivement testées de manière à garantir que l'étanchéité du cordon de soudure 62 ait été testée sur toute la longueur dudit cordon de soudure 62.

Au contraire, si le taux de fuite ϕ est supérieur ou égal au seuil cps, alors il est conclu que la portion testée du cordon de soudure 62 présente un défaut d'étanchéité. Des mesures de soudure correctives sont alors mise en oeuvre afin de corriger le défaut.

A titre d'exemple, pour une concentration en hélium dans l'espace thermiquement isolant de l'ordre de 20 %, le seuil de pression en dessous duquel le taux de fuite est mesuré est compris entre 10 et 1000 Pa absolu, de préférence inférieure à 100 Pa absolu. A titre d'exemple, la durée minimale de mesure du taux de fuite est de 5 secondes et le seuil ϕs est de l'ordre de 1,0.10-6 Pa.m3.s-1.

La figure 7 représente un dispositif de détection de fuite 54 selon un autre mode de réalisation. Ce mode de réalisation diffère du mode de réalisation décrit précédemment en ce qu'il comporte en outre une chambre d'homogénéisation 70 qui est disposée entre la chambre de détection 61 et l'équipement d'analyse 56 et en ce que la cloche de détection 55 comporte une entrée de gaz 71.

L'entrée de gaz 71 est équipée d'un robinet permettant d'établir ou d'interrompre un écoulement d'air ambiant vers la chambre de détection 61. La chambre d'homogénéisation 70 est raccordée à une extrémité de la chambre de détection 61 tandis que l'entrée de gaz 71 est raccordée à l'extrémité opposée de la chambre de détection 61.

Le mode de fonctionnement du dispositif de détection de fuite 54 est le suivant.

Lorsque la cloche de détection 55 est disposée en regard de la portion du cordon de soudure 62 à tester, le robinet de l'entrée de gaz 71 est fermé et la pompe à vide 57 est mise en fonctionnement afin de mettre la chambre de détection 61 en dépression. Dès que la pression à l'intérieur de la chambre de détection 61 passe en dessous d'un seuil de pression Ps, le robinet de l'entrée de gaz 71 est ouvert et l'ensemble du gaz préalablement contenu dans la chambre étanche est transféré vers la chambre d'homogénéisation 70. La chambre d'homogénéisation 70 présente un volume supérieur à celui de de la chambre de détection 61 et comporte par exemple un système de piston permettant d'aspirer précisément l'intégralité du gaz contenu dans la chambre de détection 61.

Le gaz contenu dans la chambre d'homogénéisation 70 est ensuite transféré en direction de l'équipement d'analyse 56 afin de déterminer un taux de fuite ϕ en gaz traceur.

Un tel mode de réalisation est avantageux en ce qu'il permet de diminuer le temps de diffusion du gaz traceur à l'intérieur de la cloche de détection 55 et permet ainsi de diminuer la durée minimale de mesure. Ceci est notamment avantageux lorsque le temps pour que le gaz traceur migre d'une extrémité à une autre de la cloche de détection 55 est susceptible d'être long en raison d'une longueur importante de la cloche de détection 55 et/ou lorsque la dépression régnant à l'intérieur de la chambre de détection 61 est insuffisante.

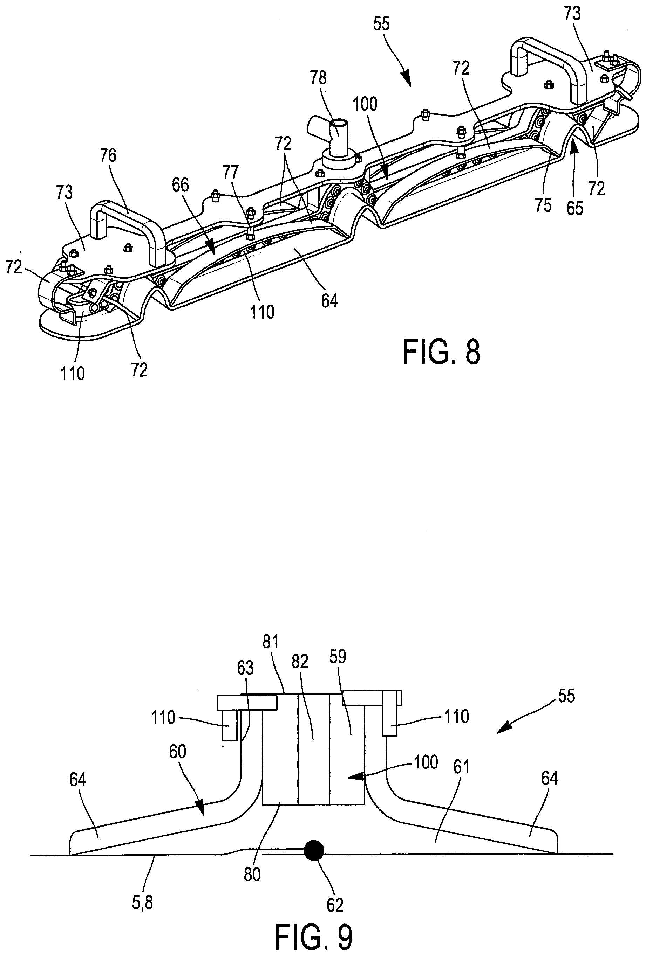

La figure 8 représente une cloche de détection 55 selon un troisième mode de réalisation. La cloche de détection 55 de la figure 8 est conçue similairement à la cloche de détection 55 de la figure 4 mais diffère notamment concernant le moyen mécanique de pression 66. En effet, la cloche de détection 55 comprend un corps principal 100 s'étendant dans une direction longitudinale, un joint d'étanchéité 60 souple fixé sur le corps principal 100 et un moyen mécanique de pression 66 porté par le corps principal et configuré pour exercer une pression dirigée vers la membrane 5, 8 sur le joint d'étanchéité 60. Le corps principal 100 comporte un noyau rigide 59. Le noyau rigide 59 comporte un canal 82 permettant de relier une surface inférieure 80 à une surface supérieure 81 du noyau rigide 59. Le canal 82 permet de mettre en communication la chambre de détection 61 à la sortie de gaz 78.

Le joint d'étanchéité 60 comporte une enveloppe 63 fixée au noyau rigide 59 par des moyens de fixation 110, par exemple consistant en un cerclage entourant toute la circonférence du noyau rigide 59 et du joint d'étanchéité 60 et fixant ces deux éléments 59/60 l'un à l'autre par l'intermédiaire d'un élément mécanique de fixation tels que des vis.. Le joint d'étanchéité 60 comporte également une lèvre d'étanchéité périphérique 64 liée à l'enveloppe 63 et présentant un contour fermé permettant d'entourer la partie du cordon de soudure 62 à tester. La lèvre périphérique 64 est de plus recourbée en direction opposée au corps principal 100 de manière à avoir une partie de la lèvre périphérique 64 sensiblement parallèle à la membrane 5, 8. La lèvre d'étanchéité périphérique 64 présente également une pluralité d'échancrures 65 espacées sur sa circonférence, les échancrures 65 ayant la forme des ondulations de la membrane 5, 8 à tester. Ainsi, lors du placement de la cloche de détection 55 sur la membrane 5, 8, les échancrures 55 permettent à la cloche de détection 55 de s'adapter à la forme ondulée de la membrane 5, 8. Le corps principal 100 et l'élément porteur 73 sont notamment traversés par une sortie de gaz 78 permettant lors de la mise en dépression de la chambre de détection 61 d'évacuer le gaz.

Le moyen mécanique de pression comporte un élément support 73 s'étendant sur toute la longueur du corps principal 100 au-dessus de celui-ci et fixés au corps principal 100. Des poignées 76 sont fixées aux deux extrémités longitudinales de l'élément support 73 de manière à permettre la manipulation de la cloche de détection 55 par un opérateur et éventuellement d'actionner le moyen mécanique de pression par un effort de l'opérateur.

Le moyen mécanique de pression 66 est composé d'une pluralité d'éléments de pression 72 qui sont sous la forme de lames courbées 72 réparties sur la lèvre d'étanchéité 64 et qui sont fixées par des moyens de fixation 77 à l'élément support 73. Les lames courbées 72 sont déformables élastiquement de manière à, lorsqu'elles sont déformées, exercer un effort de retour élastique sur la lèvre d'étanchéité 64 afin de la plaquer sur la membrane 5, 8. Pour fiabiliser l'étanchéité de la chambre de détection 61, il semble judicieux de plaquer la lèvre d'étanchéité 64 dans les zones où le risque de décollement est plus important. C'est pourquoi des lames courbées 72 sont situées notamment aux bases des échancrures 64 de la lèvre d'étanchéité 64 et aux extrémités longitudinales de la cloche de détection 55 sur la lèvre d'étanchéité 64.

Une pluralité de lames courbées 72 sont fixées à l'une de leur extrémité à l'élément support 73 tandis que l'autre extrémité est placée sur la lèvre d'étanchéité 64. Ces lames 72 sont notamment placées sur les extrémités de la cloche de détection 55. D'autres lames courbées 72 sont quant à elle fixées en leur milieu à l'élément support 73 alors que leurs deux extrémités sont placées sur la lèvre d'étanchéité 64 de manière à appliquer une pression sur deux zones différentes, ces lames 72 étant notamment placées entre deux échancrures 65.

Les lames courbées 72 présentent à chacune de leur extrémité en contact avec la lèvre d'étanchéité 64 un manchon cylindrique 75. Le manchon cylindrique 75 permet notamment un appui homogène sur la lèvre d'étanchéité 64 en évitant tout poinçonnant qui pourrait dégrader l'intégrité de la lèvre d'étanchéité 64. Le manchon cylindrique 75 s'étend dans une direction orthogonale à la direction longitudinale du corps principal 100. La longueur d'un manchon cylindrique 75 est de plus sensiblement égale à la dimension de la partie de la lèvre d'étanchéité 64 faisant saillie du corps principal 100, dans la direction où s'étend le manchon cylindrique 75. Ainsi le manchon cylindrique 75 permet au moyen mécanique de pression 66 d'exercer une pression de manière efficace sur la lèvre d'étanchéité.

Lors du placement de la cloche de détection de fuite 55 sur la zone à tester, il faut s'assurer que le moyen mécanique de pression 66 plaque bien de manière étanche le joint d'étanchéité 60 pour pouvoir tester l'étanchéité de la soudure convenablement. Une problématique est donc de s'assurer que le moyen mécanique de pression 66 joue bien son rôle tout autour de la lèvre d'étanchéité périphérique 64. Or, la zone à tester et notamment aux extrémités de la cloche de détection 55 peut être une zone de jonction entre plusieurs tôles métalliques ondulées, par exemple quatre tôles métalliques ondulées, de sorte que la zone n'est pas entièrement plane mais comporte des nivelages rendant difficile de plaquer le joint d'étanchéité 60.

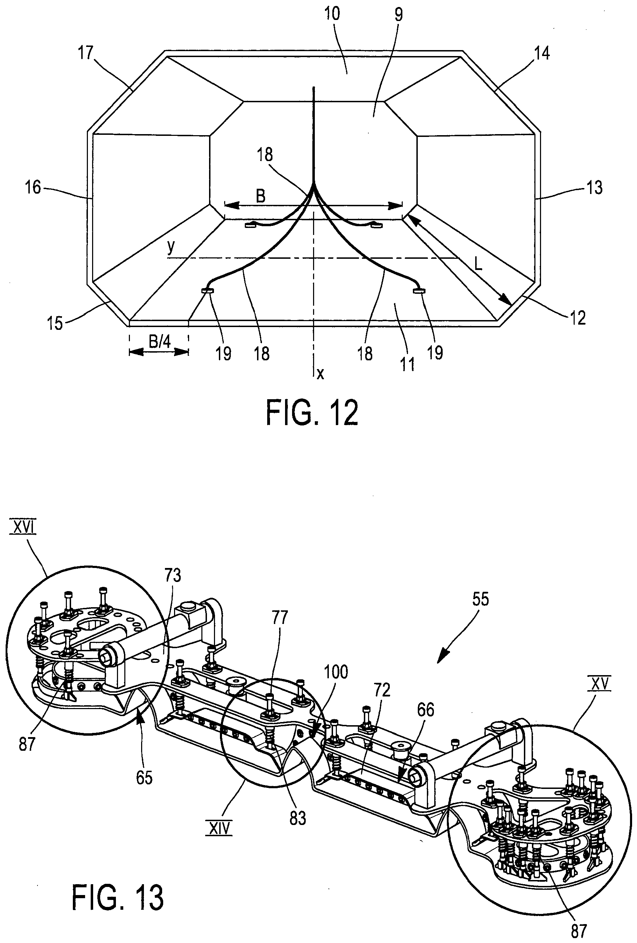

La figure 13 représente une cloche de détection 55 selon un quatrième mode de réalisation où le moyen mécanique de pression 66 a été renforcé aux extrémités de la cloche de détection 55 pour palier à la non planéité de la zone. La cloche de détection 55 de la figure 13 est conçue similairement à la cloche de détection 55 de la figure 8 mais diffère notamment concernant le moyen mécanique de pression 66. En effet, la cloche de détection 55 de la figure 13 comprend également un corps principal 100 s'étendant dans une direction longitudinale, un joint d'étanchéité 60 souple fixé sur le corps principal 100 et un moyen mécanique de pression 66 porté par le corps principal et configuré pour exercer une pression dirigée vers la membrane 5, 8 sur le joint d'étanchéité 60. Toutefois, le moyen mécanique de pression 66 comprend ici des éléments de pression 72 et des éléments de pression d'extrémité 87.

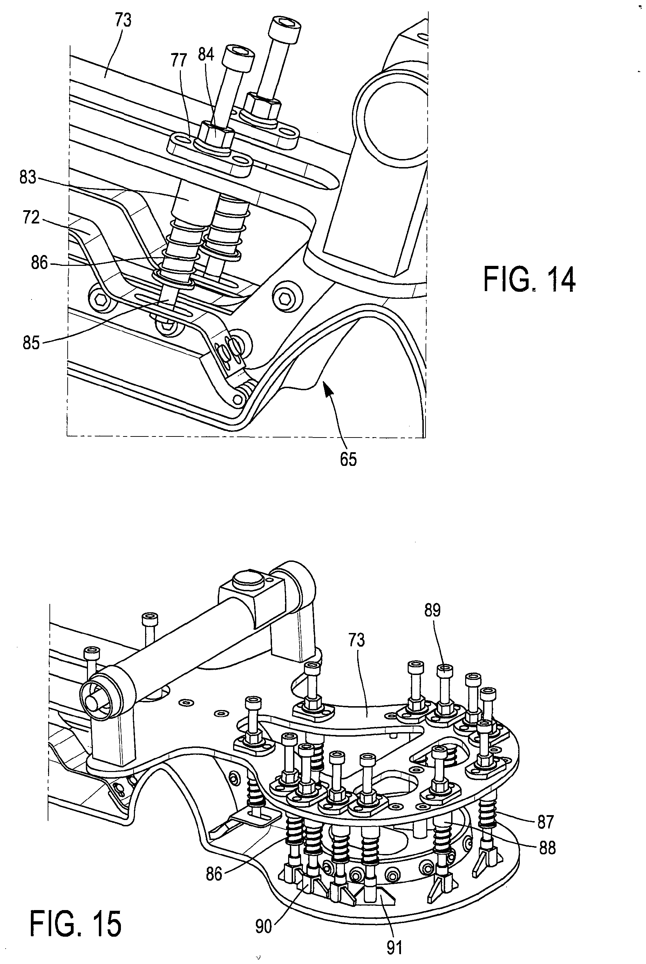

Les éléments de pression 72 comportent chacun une lame courbée 72 dont au moins une extrémité vient en butée sur la base d'une échancrure 62. Les lames courbées 72 situées entre deux échancrures contiguës comportent quant à elle l'une de leurs extrémités qui est située contre la base de l'une des échancrures 65 et l'autre des extrémités qui est située contre la base de l'autre des échancrures 65. Les éléments de pression 72 sont ici, comme illustré sur la figure 14, fixés par des moyens de fixation 77 comportant chacun un pion 83. Les pions 83 comportent chacun une tige 85 montée mobile sur un corps 84. La tige 85 comporte une extrémité en appui contre l'une des lames courbées 72. Le corps 84 est fixé à l'élément de support 73. Le pion 83 comporte également un ressort 86 reliant la tige 85 au corps 84, le ressort 86 agissant entre le corps 84 et la tige 85 afin de positionner l'extrémité de la tige 85 en appui contre la lame courbée 72. Ainsi, le ressort 86 est configuré pour exercer une force de rappel sur la lame courbée 72 de sorte que la lame courbée 72 vienne plaquer la lèvre d'étanchéité 64 contre le pied de l'ondulation.

Les éléments de pression d'extrémité 87 sont situés aux deux extrémités de la lèvre d'étanchéité 64 dans une direction longitudinale, soit aux deux extrémités de la cloche de détection de fuite 55 étant donné que cette dernière présente une forme générale longitudinale. Les éléments de pression d'extrémité 87 peuvent être conçus selon une pluralité de variantes distinctes combinables ou non sur une même cloche de détection de fuite 55. Par soucis de concision, trois variantes des éléments de pression d'extrémité 87 sont illustrées sur la figure 13 sur une même cloche de détection de fuite 55.

Les figures 15 à 17 représentent les trois variantes des éléments de pression d'extrémité 87. Comme illustré sur la figure 15 selon la première variante, l'élément de pression d'extrémité 87 comprend un pion d'extrémité 88. Les pions d'extrémité 88 comportent chacun une tige 90 montée mobile sur un corps 89. Un élément d'appui allongé 91 est fixé à une extrémité de la tige 90, l'élément d'appui allongé 91 venant en appui contre la lèvre d'étanchéité 64. Le corps 89 est fixé à l'élément de support 73. Le pion d'extrémité 88 comporte également un ressort 86 reliant la tige 90 au corps 89, le ressort 86 agissant entre le corps 89 et la tige 90 afin de positionner l'élément d'appui allongé 91 contre la lèvre d'étanchéité 64. Ainsi, le ressort 86 est configuré pour exercer une force de rappel sur l'élément d'appui allongé 91 de sorte que l'élément d'appui allongé 91 vienne plaquer la lèvre d'étanchéité 64 contre la zone à tester. De cette manière, l'effort de rappel est exercé sur la lèvre d'étanchéité 64 sur toute la longueur de l'élément d'appui allongé 91. Dans le cas de la première variante de la figure 15, chaque élément d'appui allongé 91 n'est fixé qu'à une seule tige 90 d'un pion d'extrémité 88.

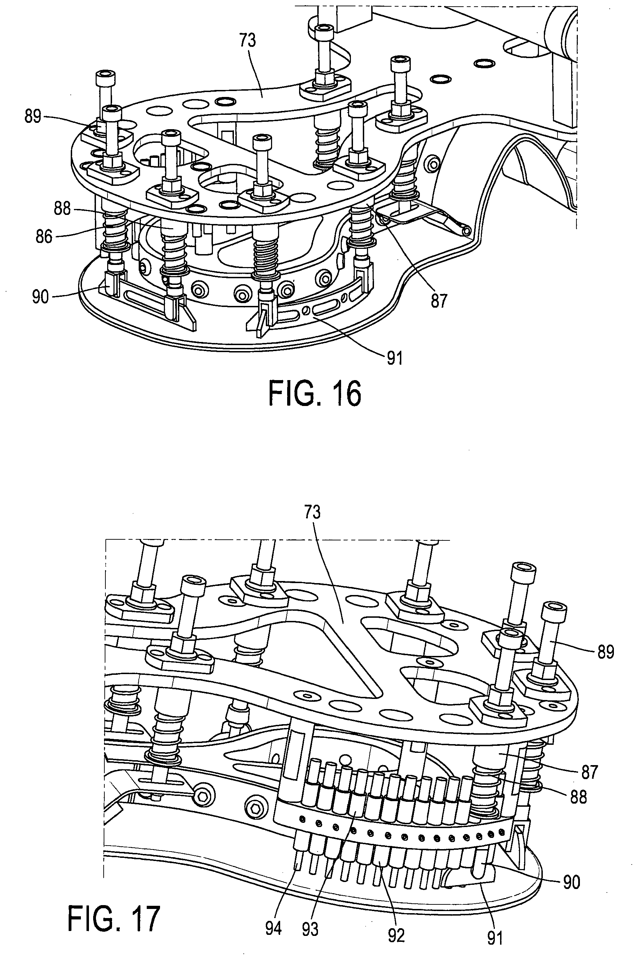

Une deuxième variante des éléments de pression d'extrémité 87 est illustrée sur la figure 16. La deuxième variante diffère de la première variante par l'élément d'appui allongé 91 des pions d'extrémité 88, les autres caractéristiques des éléments de pression d'extrémité 87 sont conservées. Dans cette variante, l'élément d'appui allongé 91 est fixé à une extrémité d'une tige 90 d'un premier pion d'extrémité 88 et à une extrémité d'une tige 90 d'un deuxième pion d'extrémité 88 adjacent au premier pion d'extrémité 88. L'élément d'appui allongé 91 est donc ici plus long que dans la première variante et est ainsi plaqué par deux pions d'extrémité 88 répartis sur sa longueur de sorte à former un appui d'une longueur plus importante sur la lèvre d'étanchéité 64.

Une troisième variation des éléments de pression d'extrémité 87 est illustrée sur la figure 17. Dans cette variante, l'élément de pression d'extrémité 87 comprend une pluralité d'éléments de réglage 92 formant une ligne d'éléments. L'élément de réglage 92 comprend une tige 93 s'étendant en direction de la lèvre d'étanchéité 64 et perpendiculairement à la zone à tester et une extrémité réglable 94 dans une direction longitudinale de la tige de sorte à venir en contact avec la lèvre d'étanchéité 64 après réglage de la tige 93. Ainsi, il est possible de régler plus finement l'élément de pression d'extrémité 87 grâce aux éléments de réglage 92 afin d'épouser plus précisément la zone à tester et donc d'améliorer l'étanchéité de la chambre de détection 61.

Il va être décrit par la suite un procédé d'utilisation d'une cloche de détection de fuite 65 telle qu'illustrée à la figure 8 dans un dispositif de détection de fuite 54 comprenant ladite cloche 65, une pompe à vide 57 raccordée à la chambre de détection 61 via la sortie de gaz 78 et un équipement d'analyse 56. L'utilisation d'un tel dispositif de détection 54 permet de contrôler l'étanchéité d'un cordon de soudure 62 entre deux tôles ondules d'une membrane d'étanchéité 5, 8.

Tout d'abord, la cloche de détection 55 est placée sur la zone à tester l'étanchéité ici une partie du cordon de soudure 62, par exemple par un ou plusieurs opérateurs via les poignées 76. Pour cela, le corps principal 100 de la cloche de détection 55 est placé au-dessus du cordon de soudure 62 de manière à ce que la longueur du corps principal 100 soit aligné et centré ave le cordon de soudure 62. Ainsi, la lèvre d'étanchéité 64 se trouve de part et d'autre du cordon de soudure 62 et entoure complètement la zone du cordon de soudure 62 à tester pour former avec le corps principal 100 et la membrane 5, 8 une chambre de détection 61 étanche, comme visible sur la figure 9.

Après que la cloche de détection 55 ait été placée sur le cordon de soudure 62, la cloche de détection 55 se fixe spontanément sur la membrane 5, 8 grâce à la force de dépression activée par la pompe à vide 57. Cette force de dépression active alors le moyen mécanique de pression 66 de manière à ce qu'il redirige la pression afin de presser la lèvre d'étanchéité 64 sur la membrane 5, 8 dans certaines zones bien définies.

Lorsque le moyen mécanique de pression 66 subit un effort sur l'élément support 73, l'élément support 73 retransmet l'effort aux lames courbées 72 via leurs fixations respectives ce qui tend à déformer élastiquement les lames courbées 72. De ce fait et par retour élastique, les lames courbées 72 transmettent l'effort à la lèvre d'étanchéité 64 via les manchons cylindriques 75 aux zones où le décollement de la lèvre d'étanchéité est le plus probable à savoir les extrémités longitudinales du corps principal 100 et les bases des échancrures 65.

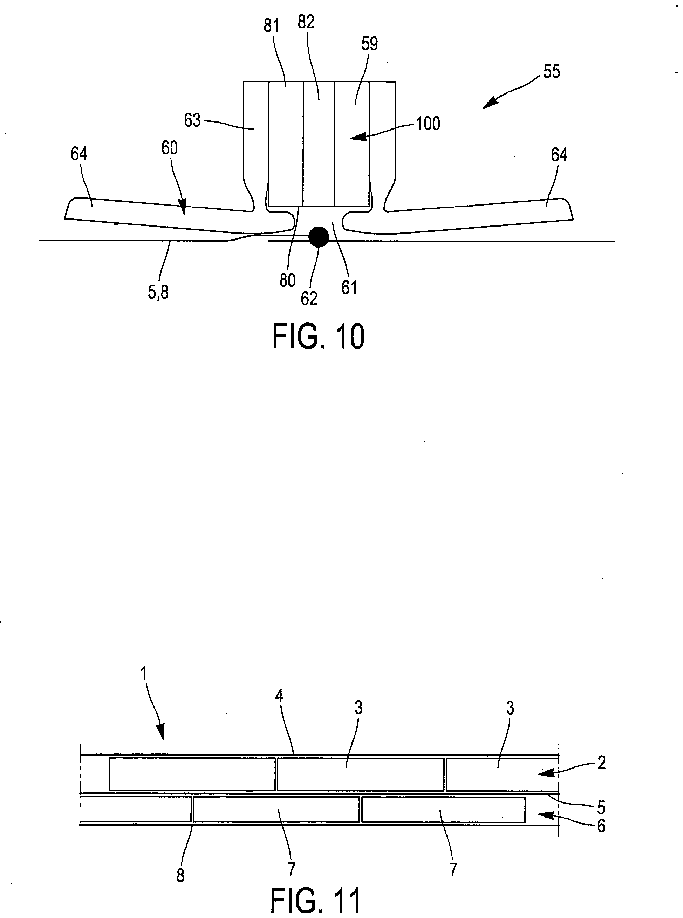

La pompe à vide 57 est alors activée de manière à créer une dépression dans la chambre de détection 61 via le canal 82 et la sortie de gaz 78. La souplesse de la lèvre d'étanchéité 64 entraine une déformation de celle-ci lors de la dépression de la chambre de détection 61 tendant à diminuer le volume de la chambre de détection 61. En effet, la lèvre d'étanchéité 64 se rapproche ainsi de part et d'autre du cordon de soudure 62 comme visible sur la figure 10. Dès lors que la pression à l'intérieur de la chambre de détection 61 passe en dessous d'un seuil de pression Ps, les gaz présents dans la chambre de détection 61 sont conduits vers l'équipement d'analyse 56.

Ainsi, de façon avantageuse, la lèvre d'étanchéité 64 occupe deux positions selon qu'elle se trouve dans son état initial, soit sans l'application d'une dépression dans la chambre de détection 61, ou dans son état de service, lorsqu'une telle dépression est appliquée.

Dans son état initial, la lèvre d'étanchéité 64 repose sans pression sur la surface d'une membrane d'étanchéité 5, 8 tandis que dans son état de service au moins une portion d'extrémité de la lèvre d'étanchéité 64 se trouve pressée sous le corps principal 100 de manière à parfaitement étanchéifier le contour ou la périphérie de la chambre de détection 61. En effet, grâce à la souplesse de la lèvre d'étanchéité 64, celle-ci vient se pincer entre le corps principal 100 et la membrane 5, 8 lors de l'application de la dépression. Ce positionnement de la lèvre d'étanchéité 64 entre le corps principal 100, écrasé ou comprimé par celui-ci, et la membrane d'étanchéité 5, 8 contribue efficacement à obtenir une parfaite étanchéité de la chambre de détection 61, permettant ainsi d'obtenir et de tenir un vide d'au moins 100 Pa (1 mbar), voire présentant une pression bien inférieure.

Ainsi, selon un mode d'exécution préféré de l'invention, la lèvre d'étanchéité 64 présente un état de service, lorsqu'une dépression est appliquée dans la chambre de détection 61, dans lequel une portion de la lèvre d'étanchéité 64 est maintenue entre le corps principal 100 et la membrane d'étanchéité 5, 8 sur au moins une partie de la périphérie de la chambre de détection 61, voire sur toute la périphérie de ladite chambre 61.

L'équipement d'analyse 56 analyse alors au court d'une durée minimale Tm la concentration en gaz des gaz présents dans la chambre de détection 61 de manière à obtenir une valeur représentative de l'évolution de la concentration. Cette valeur représentative est alors comparée à une valeur seuil de manière à déterminer si la partie du cordon de soudure 62 testée présente ou non un défaut d'étanchéité.

Si la valeur mesurée est inférieure à la valeur seuil, alors il est conclu que la partie testée ne présente pas de défaut d'étanchéité et dans ce cas, la cloche de détection 55 est alors disposée en regard d'une portion adjacente du cordon de soudure 62 en assurant un recouvrement entre les deux portions successivement testées de manière à garantir que l'étanchéité du cordon de soudure 62 ait été testée sur toute la longueur dudit cordon de soudure 62.

Si la valeur mesurée est supérieure ou égale à la valeur seuil, alors il est conclu que la partie testée du cordon de soudure 62 présente un défaut d'étanchéité. Des mesures de soudure correctives sont alors mise en œuvre afin de corriger le défaut. Des mesures à l'aide d'un outil de détection complémentaire peuvent également être envisagées de manière à localiser de manière plus précise le lieu du défaut d'étanchéité.

Dans un autre mode de réalisation non représenté, les différentes caractéristiques des modes de réalisation précédents sont combinables entre elles. En effet par exemple, les moyens mécaniques de pression 66 de la figure 8 sont adaptables à un joint d'étanchéité 60 de la figure 5 en modifiant l'agencement des lames courbées 72.

La cloche de détection, le dispositif de détection et le procédé d'utilisation du dispositif décrits ci-dessus visent plus particulièrement à tester l'étanchéité d'une membrane d'une cuve étanche et thermiquement isolante à membranes. A titre d'exemple, de telles cuves à membranes sont notamment décrites dans les demandes de brevet WO14057221, FR2691520.

Les cuves à membrane présentent une pluralité de parois qui présentent une structure multicouche, telle que représentée sur la figure 11. Chaque paroi 1 comporte, depuis l'extérieur vers l'intérieur de la cuve, une barrière thermiquement isolante secondaire 2 comportant des panneaux isolants secondaires 3 ancrés à une structure porteuse 4, une membrane secondaire 5 reposant contre la barrière thermiquement isolante secondaire 2, une barrière thermiquement isolante primaire 6 comportant des panneaux isolants primaires 7 reposant contre la membrane secondaire 2 et ancrés à la structure porteuse 4 ou aux panneaux isolants secondaires 3 et une membrane primaire 8 qui repose contre la barrière thermiquement isolante primaire 6 et qui est destinée à être en contact avec le gaz liquéfié contenu dans la cuve.

La cuve présente une forme générale polyédrique. Dans le mode de réalisation illustré sur la figure 12, la cuve présente une paroi avant 9 et une paroi arrière, non représentée, qui sont ici de forme octogonale. La cuve comporte également une paroi de plafond 10, une paroi de fond 11 et des parois latérales 11, 12, 13, 14, 15, 16, 17 qui s'étendent selon la direction longitudinale de la cuve entre la paroi avant 9 et la paroi arrière.

Les barrières thermiquement isolantes secondaires 2 des parois de cuve communiquent les unes avec les autres de manière à former, entre la structure porteuse 4 et la membrane secondaire 5, un espace thermiquement isolant secondaire, étanche. De même, les barrières thermiquement isolantes primaires 6 des parois de cuve communiquent les unes avec les autres de manière à former, entre la membrane secondaire 5 et la membrane primaire 8, un espace thermiquement isolant primaire, étanche.

Au moins l'une des membranes primaire 8 et secondaire 5 comporte une pluralité de tôles métalliques qui sont soudées les unes aux autres. Le procédé de test d'étanchéité qui sera décrit par la suite vise plus particulièrement à tester l'étanchéité des soudures permettant de raccorder les tôles métalliques les unes aux autres. Selon un mode de réalisation, la membrane à tester présente des ondulations qui lui permettent de se déformer sous l'effet des sollicitations thermiques et mécaniques générées par le fluide emmagasiné dans la cuve. Pour ce faire, comme représenté par exemple sur la figure 8, chaque tôle métallique comporte deux séries d'ondulations perpendiculaires l'une à l'autre.

Dans un mode de réalisation, le procédé de test d'étanchéité comporte trois étapes, à savoir :
- la diffusion d'un gaz traceur dans un espace thermiquement isolant recouvert par la membrane 5, 8 dont on souhaite tester l'étanchéité ;
- le contrôle de la diffusion du gaz traceur dans l'espace thermiquement isolant ; et
- la vérification de l'étanchéité des soudures de la membrane 5, 8.

Dans un autre mode de réalisation, le procédé de test d'étanchéité comporte seulement la vérification de l'étanchéité des soudures de la membrane 5, 8 sans l'aide de gaz traceur.

L'étape de diffusion d'un gaz traceur consiste à injecter un gaz traceur dans l'espace thermiquement isolant qui est recouvert par la membrane 5, 8 dont on souhaite vérifier l'étanchéité. Lorsque l'on souhaite vérifier l'étanchéité de la membrane secondaire 5, le gaz traceur est injecté dans l'espace thermiquement isolant secondaire. Dans ce cas, le procédé de test d'étanchéité est mis en œuvre avant que la barrière thermiquement isolante primaire 7 et la membrane primaire 8 ne soient installées. Lorsque l'on souhaite vérifier l'étanchéité de la membrane primaire 8, le gaz traceur est injecté dans l'espace thermiquement isolant primaire.

La figure 12 illustre schématiquement une cuve étanche et thermiquement isolante ainsi qu'un système d'injection du gaz traceur dans un espace thermiquement isolant.

Le système d'injection comporte une pluralité de conduits 18 qui sont, d'une part, reliés à une source de gaz traceur, non illustrée, et, d'autre part, reliés à des dispositifs d'injection du gaz traceur 19 ménageant un passage d'injection du gaz traceur au travers de la membrane 5, 8 dont l'étanchéité doit être testée. Plus particulièrement, les dispositifs d'injection du gaz traceur 19 ménagent des passages de gaz traceur au travers de la membrane de la paroi de fond 11. Une telle disposition est particulièrement avantageuse car le gaz traceur présente une densité de vapeur plus faible que celle de l'air de sorte qu'il a tendance à monter dans l'espace thermiquement isolant. Dès lors, l'injection du gaz traceur par le bas, au travers de la membrane 5, 8 à tester de la paroi de fond 11, permet d'assurer une diffusion rapide et homogène du gaz traceur dans l'espace thermiquement isolant.

Dans le mode de réalisation représenté sur la figure 12, la paroi de fond 11 est équipée d'au moins quatre dispositifs d'injection du gaz traceur 19 qui sont régulièrement répartis sur la surface de la paroi de fond 11. La paroi de fond 11 présente une forme rectangulaire et peut ainsi être divisée en quatre zones de surface égale par ses deux axes de symétrie x et y. Chacun des quatre dispositifs d'injection du gaz traceur 19 est disposé dans l'une des quatre zones précitées. Dans le mode de réalisation particulier illustré, chaque dispositif d'injection du gaz traceur 19 est disposé à proximité du centre de sa zone respective. Dans un mode de réalisation particulier, chacun des quatre dispositifs d'injection du gaz traceur est disposé à une distance ¼ L du bord longitudinal adjacent et à une distance ¼ B du bord transversal adjacent avec L : la dimension longitudinale de la paroi de fond 11 et B : la dimension transversale de la paroi de fond 11.

L'étape de contrôle de diffusion de gaz traceur consiste à lorsque le gaz traceur a diffusé au travers de l'espace thermiquement isolant, contrôler la diffusion du gaz traceur dans l'espace thermiquement isolant.

Pour ce faire, l'on prélève le gaz contenu dans l'espace thermiquement isolant dans lequel l'on a injecté le gaz traceur au moyen d'une pluralité de dispositifs de prélèvement de gaz ménagés au travers de la membrane recouvrant ledit espace thermiquement isolant. Chaque dispositif de prélèvement est relié à un équipement d'analyse, tel qu'un spectromètre de masse, qui permet de vérifier la présence et la concentration du gaz traceur dans la zone correspondante de l'espace thermiquement isolant.

L'étape de vérification des soudures consiste à utiliser le dispositif de détection de fuite 54, précédemment décrit, sur l'une des membranes 5, 8 de la cuve étanché et thermiquement isolante.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Cloche de détection de fuite (55) pour détecter une fuite sur une zone de test (62) d'une membrane d'étanchéité (5, 8) d'une cuve, la cloche de détection de fuite (55) comprenant :
- un corps principal (100) destiné à être disposé sur la zone de test (62) ;
- un joint d'étanchéité (60) lié au corps principal (100) et configuré pour définir une chambre de détection (61) entre le corps principal (100) et la zone de test (62), le joint d'étanchéité (60) comportant une lèvre d'étanchéité (64) périphérique présentant un contour fermé pour entourer la zone de test (62) ;
- un moyen mécanique de pression (66) porté par le corps principal (100) et comportant au moins un élément de pression (72) configuré pour exercer sur une portion de la lèvre d'étanchéité (64) une pression dirigée vers la membrane (5, 8) lorsque le corps principal (100) est disposé sur la zone de test (62),
dans laquelle la lèvre d'étanchéité (64) comporte au moins une échancrure (65) présentant une forme correspondant à celle d'une ondulation de la membrane (5, 8), l'échancrure (65) étant destinée à enjamber l'ondulation, et
**caractérisée en ce que** l'élément de pression (72) est adapté pour presser localement la lèvre d'étanchéité dans une portion de ladite lèvre d'étanchéité (64) qui est située à une base de l'échancrure (65).

2. Cloche de détection de fuite (55) selon la revendication 1, dans laquelle l'élément de pression (72) est un élément déformable élastiquement qui exerce une pression sur la portion de la lèvre d'étanchéité (64) par déformation élastique.

3. Cloche de détection de fuite (55) selon la revendication 1 ou la revendication 2, dans laquelle l'élément de pression (72) est orienté perpendiculairement au contour de la lèvre d'étanchéité (64) périphérique.

4. Cloche de détection de fuite (55) selon l'une quelconque des revendications précédentes, dans laquelle la lèvre d'étanchéité (64) est configuré pour, dans un état de service lorsqu'une dépression est appliquée dans la chambre de détection (61), qu'une portion de ladite lèvre d'étanchéité (64) soit maintenue entre le corps principal (100) et la membrane d'étanchéité (5, 8) sur au moins une partie de la périphérie de la chambre de détection (61), avantageusement sur toute la périphérie de ladite chambre (61).

5. Cloche de détection de fuite (55) selon l'une quelconque des revendications précédentes, dans laquelle la cloche de détection de fuite (55) présente une forme allongée d'une longueur supérieure ou égale à 0,5 m.

6. Cloche de détection de fuite (55) selon la revendication 5, dans laquelle le moyen mécanique de pression (66) comporte une pluralité d'éléments de pression (72) configurés pour exercer une pression sur une pluralité de portions de la lèvre d'étanchéité (64), des portions étant situées aux deux extrémités de la lèvre d'étanchéité (64) dans une direction longitudinale.

7. Cloche de détection de fuite (55) selon l'une des revendications 1 à 6, dans laquelle le moyen mécanique de pression (66) comporte une pluralité d'éléments de pression (72) configurés pour exercer une pression sur une pluralité de portions de la lèvre d'étanchéité (64), des portions étant situées aux bases de l'échancrure (65).

8. Cloche de détection de fuite (55) selon l'une des revendications 1 à 7, dans laquelle toutes les portions de la lèvre d'étanchéité (64) situées aux bases de l'échancrure (65) sont pressées par la pluralité d'éléments de pression (72) du moyen mécanique (66).

9. Cloche de détection de fuite (55) selon l'une des revendications 1 à 8, dans laquelle la lèvre d'étanchéité (64) comporte au moins deux échancrures (65) et les éléments de pression (72) comportent une lame courbée dont les deux extrémités viennent en butée sur la base de deux échancrures (65) contiguës.

10. Cloche de détection de fuite (55) selon l'une quelconque des revendications précédentes, dans laquelle l'élément de pression (72) comporte une lame courbée comprenant à une de ses extrémités en contact avec la lèvre d'étanchéité (64) un manchon cylindrique (75).

11. Cloche de détection de fuite (55) selon l'une quelconque des revendications précédentes, dans laquelle le joint d'étanchéité (60) est réalisé dans un matériau élastomère présentant une dureté comprise entre 20 et 50 shore A.

12. Cloche de détection de fuite (55) selon la revendication 11, dans laquelle le matériau élastomère du joint d'étanchéité (60) est choisi parmi le polyuréthane élastomère et le caoutchouc EPDM.

13. Cloche de détection de fuite (55) selon l'une quelconque des revendications précédentes, dans laquelle le corps principal (100) comporte un noyau rigide (59), et dans laquelle le joint d'étanchéité (60) comporte une enveloppe (63) appliquée hermétiquement contre une paroi périphérique du noyau rigide (59).

14. Cloche de détection de fuite (55) selon la revendication 13, dans laquelle le noyau rigide (59) comporte un évidement (79) sur une surface inférieure (80) destinée à être tournée vers la zone de test (62).

15. Cloche de détection de fuite (55) selon la revendication 14, dans laquelle le noyau rigide (59) comporte un canal (82) reliant l'évidement (79) à une surface supérieure (81) du noyau rigide (59) pour connecter une pompe à vide (57).

16. Dispositif de détection de fuite (54) pour tester l'étanchéité d'une membrane (5, 8) d'une cuve étanche et thermiquement isolante, le dispositif de détection de fuite (54) comprenant :
- une cloche de détection de fuite (55) selon l'une quelconque des revendications 1 à 15 ;
- une pompe à vide (57) raccordée à la chambre de détection (61) ;
- un équipement d'analyse (56) relié à la chambre de détection (61) pour analyser une
quantité de gaz présent dans la chambre de détection (61).

17. Procédé d'utilisation d'un dispositif de détection de fuite (54) selon la revendication 16 sur une zone de test (62) d'une membrane d'étanchéité (5, 8) d'une cuve, dans lequel le procédé comporte les étapes suivantes :
- placer la cloche de détection de fuite (55) sur la zone de test (62) de manière à ce que la lèvre d'étanchéité (64) entoure complètement la zone de test (62) ;
- appliquer une pression sur la lèvre d'étanchéité (64) à l'aide du moyen mécanique de pression (66) afin de presser la lèvre d'étanchéité (64) contre la membrane d'étanchéité (5, 8) ;
- mettre en dépression la chambre de détection (61) au moyen de la pompe à vide (57) ;
- conduire les gaz présents dans la chambre de détection (61) vers l'équipement d'analyse (56) ; et
- analyser au moyen de l'équipement d'analyse (56) les gaz venant de la chambre de détection (61) et délivrer une variable représentative des gaz présents dans la chambre de détection (61).

18. Procédé d'utilisation selon la revendication 17, dans lequel la cloche de détection de fuite (55) est orientée sur la zone de test (62) de manière à ce qu'une longueur de la cloche de détection de fuite (55) soit superposée avec la zone de test (62).

19. Procédé d'utilisation selon la revendication 17 ou la revendication 18, dans lequel la zone de test (62) est une partie d'un cordon de soudure (62) de la membrane d'étanchéité (5, 8).

20. Procédé d'utilisation selon l'une des revendications 17 à 19, dans lequel la zone de test (62) se situe sur une membrane d'étanchéité (5, 8) ondulée. ]

## Patentansprüche

1. Leckerkennungsglocke (55) zum Erkennen eines Lecks in einem Prüfbereich (62) einer Dichtungsmembran (5, 8) eines Behälters, wobei die Leckerkennungsglocke (55) umfasst:
- einen Hauptkörper (100), der zur Anordnung in dem Prüfbereich (62) bestimmt ist;
- eine Dichtung (60), die mit dem Hauptkörper (100) verbunden ist und ausgebildet ist zum Definieren einer Detektionskammer (61) zwischen dem Hauptkörper (100) und dem Prüfbereich (62), wobei die Dichtung (60) eine umlaufende Dichtungslippe (64) mit einer geschlossenen Kontur zum Umschließen des Prüfbereichs (62) aufweist;
- eine von dem Hauptkörper (100) getragene mechanische Druckeinrichtung (66) mit wenigstens einem Druckelement (72), das ausgebildet ist zum Ausüben eines in Richtung auf die Membran (5, 8) gelenkten Drucks auf einen Bereich der Dichtungslippe (64), wenn der Hauptkörper (100) in dem Prüfbereich (62) angeordnet ist,
wobei die Dichtungslippe (64) mindestens eine Einbuchtung (65) mit einer Form aufweist, die jener einer Wellung der Membran (5, 8) entspricht, wobei die Einbuchtung (65) zum Überspannen der Wellung bestimmt ist;
**dadurch gekennzeichnet, dass** das Druckelement (72) ausgebildet ist zur lokalen Druckbeaufschlagung der Dichtungslippe in einem Bereich der Dichtungslippe (64), der sich an einer Basis der Einbuchtung befindet.

2. Leckerkennungsglocke (55) nach Anspruch 1, wobei das Druckelement (72) ein elastisch verformbares Element ist, das durch elastische Verformung einen Druck auf den Bereich der Dichtungslippe (64) ausübt.

3. Leckerkennungsglocke (55) nach Anspruch 1 oder Anspruch 2, wobei das Druckelement (72) senkrecht zur Kontur der Dichtungslippe (64) orientiert ist.

4. Leckerkennungsglocke (55) nach einem der vorangehenden Ansprüche, wobei die Dichtungslippe (64) derart ausgebildet ist, dass in einem Betriebszustand, wenn in der Detektionskammer ein Druck ausgeübt wird, ein Bereich der Dichtungslippe (64) zumindest über einen Teil der Peripherie der Detektionskammer (61), vorteilhafterweise über die gesamte Peripherie der Kammer (61), zwischen dem Hauptkörper (100) und der Dichtungsmembran (5, 8) gehalten wird.

5. Leckerkennungsglocke (55) nach einem der vorangehenden Ansprüche, wobei die Leckerkennungsglocke (55) eine längliche Form mit einer Länge größer oder gleich 0,5 m aufweist.

6. Leckerkennungsglocke (55) nach Anspruch 5, wobei die mechanische Druckeinrichtung (66) eine Mehrzahl von Druckelementen (72) umfasst, die ausgebildet sind zum Ausüben eines Drucks auf eine Mehrzahl von Bereichen der Dichtungslippe (64) in einer Längsrichtung.

7. Leckerkennungsglocke (55) nach einem der Ansprüche 1 bis 6, wobei die mechanische Einrichtung (66) eine Mehrzahl von Druckelementen (72) umfasst, die ausgebildet sind zum Ausüben eines Drucks auf eine Mehrzahl von Bereichen der Dichtungslippe (64), wobei sich Bereiche an den Basen der Einbuchtung (65) befinden.

8. Leckerkennungsglocke (55) nach einem der Ansprüche 1 bis 7, wobei sämtliche Bereiche der Dichtungslippe (64), die sich an den Basen der Einbuchtung (65) befinden, durch die mehrzähligen Druckelemente (72) der mechanischen Einrichtung (66) mit Druck beaufschlagt werden.

9. Leckerkennungsglocke (55) nach einem der Ansprüche 1 bis 8, wobei die Dichtungslippe (64) mindestens zwei Einbuchtungen (65) hat und die Druckelemente (72) eine gebogene Klinge aufweisen, deren beide Enden an der Basis der beiden zusammenhängenden Einbuchtungen (65) zur Anlage kommen.

10. Leckerkennungsglocke (55) nach einem der vorangehenden Ansprüche, wobei das Druckelement eine gebogene Klinge umfasst, die an einem ihrer sich mit der Dichtungslippe (64) in Kontakt befindenden Enden eine zylindrische Hülse (75) aufweist.

11. Leckerkennungsglocke (55) nach einem der vorangehenden Ansprüche, wobei die Dichtung (60) aus einem Elastomer-Material einer Härte zwischen 20 und 50 Shore A gebildet ist.

12. Leckerkennungsglocke (55) nach Anspruch 11, wobei das Elastomer-Material der Dichtung (60) ausgewählt ist aus Polyurethan-Elastomer und EPDM-Kautschuk.

13. Leckerkennungsglocke (55) nach einem der vorangehenden Ansprüche, wobei der Hauptkörper (100) einen starren Kern (59) hat und wobei die Dichtung (60) eine Hülle (63) aufweist, die hermetisch dicht an einer Umfangswand des starren Kerns anliegt.

14. Leckerkennungsglocke (55) nach Anspruch 13, wobei der starre Kern (59) an einer Unterseite (80) eine dem Prüfbereich (62) zuzukehrende Vertiefung (79) hat.

15. Leckerkennungsglocke (55) nach Anspruch 14, wobei der starre Kern einen Kanal (82) aufweist, der zum Anschluss einer Vakuumpumpe (57) die Vertiefung (79) mit einer Oberseite (81) des starren Kerns (59) verbindet.

16. Leckerkennungsvorrichtung (54) zum Prüfen der Dichtheit einer Membran (5, 8) eines dichten und thermisch isolierten Behälters, wobei die Leckerkennungsvorrichtung (54) umfasst:
- eine Leckerkennungsglocke (55) nach einem der Ansprüche 1 bis 15;
- eine mit der Detektionskammer (61) verbundene Vakuumpumpe (57);
- eine mit der Detektionskammer (61) verbundene Analyseausrüstung (56) zum Analysieren einer in der Detektionskammer (61) vorhandenen Gasmenge.

17. Verfahren zur Verwendung einer Leckerkennungsvorrichtung (54) nach Anspruch 16 in einem Prüfbereich (62) einer Dichtungsmembran (5, 8) eines Behälters, wobei das Verfahren die folgenden Schritte umfasst:
- Anordnen der Leckerkennungsglocke (55) in dem Prüfbereich (62), so dass die Dichtungslippe (64) den Prüfbereich (62) vollständig umschließt;
- Anwenden eines Drucks auf die Dichtungslippe (64) mittels einer mechanischen Druckeinrichtung (66), um die Dichtungslippe (64) an die Dichtungsmembran (5, 8) zu drücken;
- Beaufschlagen der Detektionskammer (61) mit Unterdruck mittels der Vakuumpumpe (57);
- Leiten der in der Detektionskammer (61) vorhandenen Gase zur Analyseausrüstung (56); und
- Analysieren der aus der Detektionskammer (61) kommenden Gase und Liefern einer Variablen, die repräsentativ ist für in der Detektionskammer (61) vorhandene Gase.

18. Verwendungsverfahren nach Anspruch 17, wobei die Leckerkennungsglocke (55) in dem Prüfbereich (62) derart orientiert ist, dass der Prüfbereich (62) eine Länge der Leckerkennungsglocke (55) überlagert.

19. Verwendungsverfahren nach Anspruch 17 oder Anspruch 18², wobei der Prüfbereich (62) ein Teil einer Schweißnaht (62) der Dichtungsmembrane (5, 8) ist.

20. Verwendungsverfahren nach einem der Ansprüche 17 bis 19, wobei sich der Prüfbereich (62) an einer gewellten Dichtungsmembran (5, 8) befindet.

## Claims

1. A bell-shaped leak detection device (55) for detecting a leak on a test zone (62) of a sealing membrane (5, 8) of a tank, the bell-shaped leak detection device (55) comprising:
- a main body (100) intended to be arranged on the test zone (62);
- a seal (60) connected to the main body (100) and configured to define a detection chamber (61) between the main body (100) and the test zone (62), the seal (60) comprising a peripheral sealing lip (64) having a closed contour for surrounding the test zone (62);
- a mechanical pressure means (66) supported by the main body (100) and comprising at least one pressure element (72) configured to exert a pressure, on a portion of the sealing lip (64), directed toward the membrane (5, 8) when the main body (100) is arranged on the test zone (62)
wherein the sealing lip (64) comprises at least one indentation (65), the shape of which corresponds to that of a corrugation of the membrane (5, 8), the indentation (65) being intended to straddle the corrugation
**characterized in that** the pressure element (72) is adapted to locally press the sealing lip into a portion of said sealing lip (64) which is located at a base of the indentation (65).

2. The bell-shaped leak detection device (55) as claimed in claim 1, wherein the pressure element (72) is a resiliently deformable element that exerts a pressure on the portion of the sealing lip (64) by resilient deformation.

3. The bell-shaped leak detection device (55) as claimed in claim 1 or claim 2, wherein the pressure element (72) is oriented perpendicular to the contour of the peripheral sealing lip (64).

4. The bell-shaped leak detection device (55) as claimed in any one of the preceding claims, wherein the sealing lip (64) is configured such that, in a service state when a depression is applied in the detection chamber (61), a portion of said sealing lip (64) is held between the main body (100) and the sealing membrane (5, 8) over at least part of the periphery of the detection chamber (61), advantageously over the entire periphery of said chamber (61).

5. The bell-shaped leak detection device (55) as claimed in any one of the preceding claims, wherein the bell-shaped leak detection device (55) has an elongated shape, the length of which is greater than or equal to 0.5 m.

6. The bell-shaped leak detection device (55) as claimed in claim 5, wherein the mechanical pressure means (66) comprise a plurality of pressure elements (72) configured to exert a pressure on a plurality of portions of the sealing lip (64), with portions being located at the two ends of the sealing lip (64) in a longitudinal direction.

7. The bell-shaped leak detection device (55) as claimed in any one of claims 1 to 6, wherein the mechanical pressure means (66) comprise a plurality of pressure elements (72) configured to exert a pressure on a plurality of portions of the sealing lip (64), with portions being located at the bases of the indentation (65).

8. The bell-shaped leak detection device (55) as claimed in any one of claims 1 to 7, wherein all the portions of the sealing lip (64) located at the bases of the indentation (65) are pressed by the plurality of pressure elements (72) of the mechanical means (66).

9. The bell-shaped leak detection device (55) as claimed in any one of claims 1 to 8, wherein the sealing lip (64) comprises at least two indentations (65), and the pressure elements (72) comprise a curved strip, the two ends of which come into abutment on the base of two contiguous indentations (65).

10. The bell-shaped leak detection device (55) as claimed in any one of the preceding claims, wherein the pressure element (72) comprises a curved strip comprising, at one of the ends thereof that is in contact with the sealing lip (64), a cylindrical sleeve (75).

11. The bell-shaped leak detection device (55) as claimed in any one of the preceding claims, wherein the seal (60) is made from an elastomer material, the hardness of which is between 20 and 50 Shore A.

12. The bell-shaped leak detection device (55) as claimed in claim 11, wherein the elastomer material of the seal (60) is selected from polyurethane elastomer and EPDM rubber.

13. The bell-shaped leak detection device (55) as claimed in any one of the preceding claims, wherein the main body (100) comprises a rigid core (59), and wherein the seal (60) comprises a casing (63) hermetically applied against a peripheral wall of the rigid core (59).

14. The bell-shaped leak detection device (55) as claimed in claim 13, wherein the rigid core (59) comprises a recess (79) on a lower surface (80) that is intended to be rotated toward the test zone (62).

15. The bell-shaped leak detection device (55) as claimed in claim 14, wherein the rigid core (59) comprises a channel (82) connecting the recess (79) to an upper surface (81) of the rigid core (59) for connecting a vacuum pump (57).

16. A leak detection device (54) for testing the seal of a membrane (5, 8) of a sealed and thermally insulating tank, the leak detection device (54) comprising:
- a bell-shaped leak detection device (55) as claimed in any one of claims 1 to 15;
- a vacuum pump (57) connected to the detection chamber (61);
- analysis equipment (56) connected to the detection chamber (61) for analyzing an
amount of gas present in the detection chamber (61).

17. A method for operating a leak detection device (54) as claimed in claim 16 on a test zone (62) of a sealing membrane (5, 8) of a tank, wherein the method comprises the following steps:
- placing the bell-shaped leak detection device (55) on the test zone (62) so that the sealing lip (64) completely surrounds the test zone (62);
- applying a pressure onto the sealing lip (64) using the mechanical pressure means (66) in order to press the sealing lip (64) against the sealing membrane (5, 8);
- depressurizing the detection chamber (61) by means of the vacuum pump (57);
- conveying the gases present in the detection chamber (61) toward the analysis equipment (56); and
- analyzing, by means of the analysis equipment (56), the gases originating from the detection chamber (61) and delivering a variable representing the gases present in the detection chamber (61).

18. The operating method as claimed in claim 17, wherein the bell-shaped leak detection device (55) is oriented on the test zone (62) so that a length of the bell-shaped leak detection device (55) is superposed with the test zone (62).

19. The operating method as claimed in claim 17 or claim 18, wherein the test zone (62) is part of a weld bead (62) of the sealing membrane (5, 8).

20. The operating method as claimed in any one of claims 17 to 19, wherein the test zone (62) is located on a corrugated sealing membrane (5, 8).
